Europäisches Patentamt

European Patent Office

Office européen des brevets

(11) Numéro de publication: **0 007 885**

**A1**

# (12) DEMANDE DE BREVET EUROPEEN

(21) Numéro de dépôt: 79810038.4

(22) Date de dépôt: 17.05.79

(51) Int. Cl.³: **G 02 F 1/01**

(30) Priorité: 18.05.78 CH 5377/78

(43) Date de publication de la demande:
06.02.80 Bulletin 80/3

(84) Etats Contractants Désignés:
BE CH DE FR GB IT LU NL SE

(71) Demandeur: **BATTELLE MEMORIAL INSTITUTE**
**7 route de Drize**
**CH-1227 Carouge/Genève(CH)**

(72) Inventeur: **Genequand, Pierre**
**15, rue Dassier**
**CH-1201 Genève(CH)**

(74) Mandataire: **Dousse, Blasco et al,**
**7, route de Drize**
**CH-1227 Carouge/Genève(CH)**

(54) Dispositif d'affichage sélectif d'une pluralité d'informations et son procédé de fabrication.

(57) Dispositif d'affichage comprenant une fenêtre transparente (1), une plaque (5) et deux plaques intermédiaires isolantes superposées (18a, 18b) interposées entre la fenêtre et la plaque de base, ces plaques intermédiaires étant ajourées de façon à délimiter une pluralité de jours transversaux (19) s'étendant sans entraves de la plaque (5) à la fenêtre (1). A l'intérieur des jours (19) s'étendent une pluralité d'électrodes mobiles (10), encastrées par au moins une de leurs extrémités (21) entre les plaques intermédiaires (18a, 18b) et reliées à l'extérieur de l'enceinte (16) par des pistes de connexion (22₁ à 22ₓ). Les faces internes de la fenêtre (1) et de la plaque de base (5) sont en outre pourvues chacune d'un réseau d'électrodes fixes (3₁ à 3ₙ; 6₁ à 6ₙ), protégé par une couche isolante unique (4, 7), l'enceinte (16) étant remplie d'un liquide opaque non polaire à haute résistivité électrique. Les électrodes mobiles (10) peuvent être défléchies sélectivement électrostatiquement entre deux positions stables (10A, 10B) pour lesquelles elles viennent respectivement se plaquer contre la fenêtre (1) et contre la plaque (5), les électrodes (10) étant ainsi visibles respectivement occultées par le liquide opaque à travers de la fenêtre.

Procédé de fabrication dudit dispositif d'affichage.

FIG. 2

EP 0 007 885 A1

TITRE MODIFIÉ
voir page de garde

## DISPOSITIF D'AFFICHAGE SELECTIF
## D'UNE PLURALITE D'INFORMATIONS

### Domaine technique

La présente invention concerne l'affichage sélectif d'informations et en particulier les systèmes d'affichage du type dit "passif" comprenant au moins un organe d'affichage mobile qui réfléchit la lumière incidente.

On connaît divers systèmes d'affichage du type dit "actif" ou "passif" qui permettent l'affichage de petits caractères à l'aide de cristaux liquides, de diodes électroluminescentes, de décharges plasma ou de cathodoluminescence.

Toutefois, ces systèmes connus ne se prêtent pas à des affichages sur des surfaces plus grandes, telles que requises par exemple dans les cas suivants : horloges de gros calibre, tableaux de bord de voitures et panneaux d'affichage d'informations dans les lieux publics (aérogares, stades de sport, signalisation routière, etc ...).

Ainsi, les systèmes d'affichage du type dit "actif", qui produisent leur propre lumière, sont inappropriés pour des affichages à grande surface étant donné que leur consommation d'énergie peut devenir prohibitive (plusieurs $kW/m^2$) pour qu'ils puissent être visibles sous une forte illumination ambiante. De même, leur coût peut devenir prohibitif pour de grandes surfaces, notamment dans le cas de diodes électroluminescentes ou de panneaux à décharge plasma.

Divers systèmes d'affichage connus du type dit "passif", qui utilisent la lumière ambiante, et notamment ceux à cristaux liquides, posent quant à eux des problèmes importants de fabrication, telle la nécessité d'une grande précision de l'écartement interélectrodes de l'ordre de quelques microns. En outre, leur angle de visibilité est généralement relativement restreint, cet angle pouvant être inférieur à 30° par rapport à la normale au plan d'affichage, ce qui est insuffisant pour diverses applications. De plus, ces systèmes d'affichage connus ne fonctionnent que dans une gamme relativement restreinte de la température ambiante.

Or, pour des affichages à moyenne ou grande surface, on utilise notamment des systèmes mécaniques à plaquettes basculantes, qui permettent de réaliser un contraste élevé avec une faible consommation d'énergie et un prix de revient relativement modéré. Cependant, le nombre d'informations que ces systèmes mécaniques peuvent afficher est évidemment limité par le nombre des plaquettes qu'ils comportent. En outre, leur vitesse de commutation est d'autant plus lente que le nombre de signes différents affichés augmente, car le temps de défilement des plaquettes augmente en fonction de leur nombre. De plus, de tels systèmes d'affichage mécanique sont sujets aux intempéries, et en particulier à la corrosion des parties mécaniques.

Par conséquent, il y a un intérêt certain à réaliser un système d'affichage du type alphanumérique à moyenne ou grande surface, à haut contraste, à faible consommation d'énergie et à faible prix de revient, insensible aux intempéries, et pouvant fonctionner dans une grande gamme de température ambiante, entre -30°C et +80°C par exemple.

On a déjà proposé différents systèmes d'affichage du type passif utilisant des forces électrostatiques pour déplacer des corps qui réfléchissent ou absorbent la lumière. L'état de la technique relatifs à de tels dispositifs d'affichage du type passif, électrostatique peut être illustré par les brevets américains suivants : 3.304.549 (affichage à volet pivotant); 3.796.480 (affichage à membrane réflective à déflection variable); 3.924.228 (affichage à membrane à deux positions dans un fluide opaque); 3.668.106 (affichage électrophorétique); ou le brevet britannique 1.553.458 (affichage à membrane à deux positions dans un fluide opaque).

Comme on le sait, la force d'attraction électrostatique F qui s'exerce entre deux armatures conductrices parallèles de surface S immergées à une distance $\underline{d}$ l'une de l'autre au sein d'un milieu fluide isolant de constante diélectrique relative $\mathcal{E}$ , sous l'effet du champ électrostatique E résultant de l'application d'une tension V entre ces armatures, est donnée par la relation suivante :

$$\frac{F}{S} = \mathcal{E}.\mathcal{E}_o.E^2 = \mathcal{E}.\mathcal{E}_o.\frac{V^2}{d^2}$$

où $\mathcal{E}_o$ est la constante diélectrique absolue dans le vide.

Cette force d'attraction électrostatique F/S par unité de surface augmentera donc proportionnellement à $\mathcal{E}, V^2$ et $1/d^2$, bien que les valeurs de $\mathcal{E}, V$ et $\underline{d}$ présentent évidemment des limitations pratiques plus ou moins importantes.

Ainsi, par exemple l'emploi d'un milieu ayant une constante diélectrique élevée semblerait indiqué, afin d'augmenter la force électrostatique (F/S) en conséquence, mais l'expérience a démontré qu'il en résulte des problèmes pratiques importants, qui seront précisés plus loin.

De plus, pour qu'un système d'affichage à actionnement par force électrostatique puisse être commandé à l'aide de signaux électriques d'une tension relativement basse ( < 200 V), afin d'être compatible avec les registres de commande pouvant être réalisés à un prix de revient intéressant, il faut que la distance $\underline{d}$ entre les conducteurs produisant le champ d'attraction électrostatique soit très restreinte, généralement à une valeur inférieure à 200 $\mu$ , ce qui exclut des déplacements importants dans ce champ.

On a proposé des systèmes d'affichage basés sur la migration électrophorétique de particules d'une poudre très fine en suspension dans un liquide qui absorbe la lumière. Ces particules sont attirées électrophorétiquement, soit vers une fenêtre transparente munie d'une électrode transparente, afin d'y assurer l'affichage par réflexion de la lumière incidente, soit vers une contre-électrode masquée par le liquide absorbant.

Un tel système d'affichage du type électrophorétique est décrit dans le brevet américain No 3.668.106.

Des phénomènes de sédimentation et d'attraction non-uniforme des particules, notamment sur les bords des électrodes, limitent toutefois le champ des applications entrant en ligne de compte pour ce type de système d'affichage fonctionnant par électrophorèse.

On a par ailleurs proposé d'autres systèmes basés sur la déflection électrostatique de membranes, tels que décrits par exemple dans les brevets américains No 3.796.480 et 3.924.228. Le premier de ces brevets concerne un panneau d'affichage comprenant une membrane déformable qui nécessite une optique permettant de projeter un faisceau de lumière modulé par ledit panneau sur un écran. Le deuxième brevet concerne un panneau d'affichage comprenant des organes d'affichage déformables actionnés par voie électrostatique. Or, l'emploi de tels systèmes d'affichage du type électrostatique est d'un intérêt certain étant donné notamment les avantages théoriques suivants qui en résultent :

- Possibilité d'une très bonne visibilité de l'affichage, avec un contraste élevé, et cela dans une très grande gamme d'angles d'observation et d'illuminations ambiantes allant jusqu'au plein soleil.

- Puissance extrêmement faible nécessaire pour la commande de l'affichage.

- Possibilité d'affichage dans une très grande gamme de dimensions qui peuvent être adaptées en particulier à des surfaces plus ou moins grandes.

- Compatibilité avec une commande de l'affichage par des signaux électriques à tension relativement basse qui peuvent être fournis par des circuits logiques de construction conventionnelle, d'où il résulte la possibilité d'un adressage par multiplexage pour simplifier la commande.

- Possibilité de réaliser un système scellé insensible aux intempéries et capable de fonctionner dans une gamme de température plus ou moins grande.

Toutefois, afin de pouvoir réaliser pratiquement les avantages ci-dessus, il est nécessaire de tenir compte autant que possible des hautes exigences actuelles quant à la fiabilité de l'affichage.

Tout d'abord, un affichage scellé, moderne doit pouvoir fonctionner pendant plusieurs années sans défaillance, et sans nécessiter un entretien notable.

Etant donné que les affichages à actionnement électrostatique n'ont en général pas de mémoire, cela signifie qu'ils se trouvent sous tension pendant tout leur fonctionnement et doivent donc pouvoir supporter cette tension pendant de très longues périodes, sans subir une détérioration notable, due en particulier à des effets électrochimiques.

Un panneau moderne permettant d'afficher un grand nombre d'informations et pouvant être commandé par une logique évoluée, doit en outre pouvoir subir sans faille un très grand nombre de commutations. Pour un panneau d'affichage de 20 caractères alpha-numériques en adressage matriciel de 5 x 7 points chacun, les organes d'affichage mobiles devraient pouvoir subir chacun $10^8$ commutations avec une probabilité de panne de $10^{-3}$. Il en résulte des exigences extrêmement sévères quant à la fatigue des organes d'affichage mobiles, de leurs points de fixation et de leur connexions électriques.

De plus, ces critères de fiabilité très sévères doivent être compatibles avec une structure aussi simple que possible notamment pour la fixation et la connexion des éléments d'affichage, pour que des panneaux pouvant afficher un grand nombre d'informations sur une surface importante puissent être produits à un prix acceptable.

Or, la fabrication de tels panneaux selon les structures connues conduit à une fiabilité et une reproductibilité insuffisantes ainsi qu'à des problèmes de fabrication inextricables. En effet, les structures connues nécessitent des opérations de fabrication complexes pouvant présenter de nombreuses sources d'erreur par suite de fixation et de connexion défectueuses d'un organe d'affichage mobile. Elles impliquent aussi une fatigue mécanique importante des points de fixation lors du fonctionnement de l'affichage.

Exposé de l'invention

Un des buts de l'invention est de satisfaire aux sévères exigences mentionnées ci-dessus tout en résolvant les problèmes industriels liés à la nécessité d'un montage très précis de chaque organe d'affichage mobile dans un espace extrêmement restreint, ainsi que sa connexion électrique à un point de contact externe et tout en diminuant fortement les effets de fatigue en cours de fonctionnement de l'affichage.

A cet effet, l'invention vise à permettre la fixation reproductible, simple et fiable des organes mobiles d'affichage en éliminant la nécessité du collage et de la mise en place individuelle de ces organes. Elle vise aussi à réduire notablement l'amplitude des déformations de flexion responsables de la fatigue.

Le contraste optique du panneau d'affichage actionné par voie électrostatique peut par ailleurs être diminué plus ou moins rapidement par suite de phénomènes d'électrolyse susceptibles de se produire dans les liquides à haute constante électrique proposés jusqu'ici, et de conduire ainsi à la formation de bulles ou de produits électrochimiques opaques qui se déposent sur la surface interne de la fenêtre transparente servant à l'affichage et/ou sur l'organe d'affichage mobile lui-même.

Un autre but de l'invention vise donc à utiliser des fluides exempts des phénomènes d'électrolyse mentionnés. Pour réaliser ce but on a remarqué que l'emploi de fluides à haute constante diélectrique, proposés dans les solutions connues bien que permettant le fonctionnement à des tensions relativement basses (10 à 20 V) ne permet quand même pas le fonctionnement aux tensions normalisées des circuits logiques actuels (3 à 5 V). Des circuits d'interface permettant de commander l'affichage sont donc de toute façon nécessaires et existent d'ailleurs aujourd'hui à des prix très modérés jusqu'à des tensions de l'ordre de 150 V.

Or, les fluides pouvant être utilisés dans la présente invention ont une constante diélectrique qui n'est pas nécessairement élevée, mais est néanmoins largement suffisante pour permettre des tensions inférieures à 100 V, tout en étant exempts des phénomènes d'électrolyse liés à l'emploi de fluides à haute constante diélectrique.

Or, le but principal visé dans la présente invention est de tenir compte autant que possible des problèmes précisés ci-dessus et de fournir un dispositif d'affichage sélectif d'informations permettant de réaliser les avantages mentionnés plus haut, qui découlent de l'emploi d'organes d'affichage mobiles actionnés par voie électrostatique.

A cette fin, la présente invention a pour objet un dispositif d'affichage sélectif d'une pluralité d'informations, comprenant deux plaques de base isolantes d'extension prédéterminée disposées en regard et à distance l'une de l'autre, dont au moins l'une est transparente, délimitant en coopération avec un joint périphérique disposé entre lesdites plaques de base une enceinte étanche aux fluides, caractérisé par le fait que ladite enceinte étanche contient :

- deux plaques intermédiaires isolantes superposées, interposées entre lesdites plaques de base de façon à maintenir un écartement prédéterminé entre ces dernières, et présentant une extension inférieure à celle desdites plaques de base de façon à délimiter un canal périphérique entre ces plaques intermédiaires et ledit joint périphérique, chacune desdites plaques intermédiaires étant ajourée par rapport à l'autre de façon à délimiter, en coopération l'une avec l'autre, une pluralité de jours transversaux s'étendant sans entraves d'une plaque de base à l'autre tout en étant en libre communication les uns avec les autres et/ou ledit canal périphérique,

- une pluralité d'éléments d'affichage disposés à l'intérieur desdits jours transversaux, chaque élément d'affichage comprenant une première et une seconde électrodes fixes disposées contre les faces en regard desdites plaques de base, dont au moins celle disposée contre la plaque de base transparente est également transparente, ainsi qu'une troisième électrode mobile encastrée par au moins l'une de ses extrémités entre lesdites plaques intermédiaires, susceptible d'être défléchie par des forces électrostatiques entre une première et une seconde positions stables pour lesquelles elle vient respectivement se plaquer contre lesdites première et seconde électrodes fixes, chacune desdites électrodes mobiles présentant par ailleurs une structure ajourée lui conférant une résistance au déplacement dans les fluides réduite,

- des moyens d'isolation servant à empêcher tout contact et passage de courant, lorsque lesdites électrodes mobiles se trouvent situées dans l'une ou l'autre de leurs deux positions stables, entre ces dernières et lesdites électrodes fixes,

- un liquide opaque remplissant ladite enceinte étanche, dont la couleur contraste avec la couleur de la face desdites électrodes mobiles située en regard de ladite plaque de base transparente, de façon à occulter ces électrodes mobiles lorsqu'elles se trouvent plaquées contre l'autre plaque de base non transparente, ledit liquide opaque étant constitué par une substance essentiellement non polaire présentant une résistivité suffisamment élevée pour empêcher le passage de tout courant d'électrolyse notable au travers de ce liquide et pour éviter ainsi la formation de produits d'électrolyse susceptibles de détériorer le contraste de l'affichage,

- des premiers et seconds moyens pour connecter respectivement lesdites premières et secondes électrodes fixes à l'extérieur de ladite enceinte étanche,

- et, une pluralité de pistes conductrices pour connecter lesdites électrodes mobiles à l'extérieur de ladite enceinte étanche, s'étendant entre les portions non ajourées desdites plaques intermédiaires, depuis lesdites extrémités encastrées desdites électrodes mobiles jusqu'à venir déboucher au travers dudit joint périphérique, lesdites électrodes mobiles étant ainsi destinées à constituer les organes d'affichage proprement dits permettant, lorsqu'elles sont plaquées sélectivement contre ladite plaque de base transparente, l'affichage de ladite pluralité d'informations.

On voit ainsi, dans le dispositif d'affichage qui vient d'être défini, que ce sont les électrodes mobiles des différents éléments d'affichage encastrées entre les deux plaques intermédiaires superposées qui constituent les organes d'affichage proprement dits chargés d'assurer l'affichage des informations désirées, par amenée sélective contre la plaque de base transparente de celles de ces électrodes mobiles destinées à assurer, seules ou en combinaison, la composition de ces informations désirées, les autres électrodes mobiles qui restent plaquées contre l'autre plaque de base non transparente se trouvant quant à elles occultées par le liquide opaque s'interposant entre ces dernières et la plaque transparente. Ces électrodes mobiles peuvent, selon le type d'informations devant être affiché, être agencées selon des configurations très diverses : groupement d'électrodes mobiles sous forme matricielle, selon un réseau de lignes et colonnes permettant par activation sélective un affichage visuel selon toute configuration désirée, par exemple affichage alphanumérique; groupement d'électrodes mobiles sous forme d'unités d'affichage à sept segments (formant une figure "8" selon une disposition bien connue) permettant de former sélectivement différents caractères numériques; groupement d'électrodes mobiles côte à côte selon une rangée droite ou courbe, à la manière d'un "bargraph", permettant d'afficher une grandeur donnée sur une échelle linéaire; utilisation d'électrodes mobiles indépendantes les unes des autres et porteuses chacune d'une information préinscrite appropriée, permettant l'affichage de ces informations préinscrites à tout instant désiré; combinaison des différents agencements sus-énoncés, etc ... La forme et la taille de chacune de ces électrodes mobiles peut par ailleurs être choisie plus ou moins librement en fonction de l'application envisagée.

Les électrodes fixes associées aux différentes électrodes mobiles du dispositif d'affichage selon l'invention peuvent quant à elles être associées isolément à chacune de ces électrodes mobiles, en s'étendant chacune au droit d'une seule électrode mobile (par exemple dans le cas de l'utilisation d'électrodes mobiles indépendantes porteuses d'informations préinscrites), ou préférentiellement, être communes à tout un groupement d'électrodes mobiles, en s'étendant chacune au droit de tout ce groupement d'électrodes mobiles (par exemple électrodes fixes s'étendant, dans le cas d'un groupement d'électrodes mobiles sous forme matricielle, le long de chacune des lignes ou colonnes de ce réseau matriciel; ou électrodes fixes s'étendant, dans le cas d'un groupement d'électrodes mobiles sous forme d'unités d'affichage à sept segments, au droit de chacune de ces unités d'affichage; ou encore électrodes fixes s'étendant, dans le cas d'un groupement d'électrodes sous la forme d'un bargraph, au droit du bargraph tout entier).

Dans le dispositif d'affichage selon l'invention, les deux plaques intermédiaires isolantes superposées qui se trouvent interposées entre les deux plaques de base sont par ailleurs susceptibles d'être ajourées selon des configurations très diverses, l'essentiel étant que ces plaques intermédiaires délimitent toujours en coopération l'une avec l'autre une pluralité de jours transversaux qui s'étendent sans entraves d'une plaque de base à l'autre, de façon à permettre le libre déplacement au travers de ces jours des différentes électrodes mobiles qui y sont disposées, tout en restant en libre communication les uns avec les autres et/ou le canal périphérique ménagé entre ces plaques intermédiaires et le joint périphérique, de façon à permettre un bon remplissage de l'ensemble de ces jours par le liquide opaque fortement résistif. La configuration d'ajourage devant être adoptée pour ces plaques intermédiaires sera bien entendu choisie en fonction de l'agencement désiré pour les électrodes mobiles, de façon que la distribution des jours transversaux obtenus par superposition des plaques intermédiaires corresponde à l'agencement désiré pour ces électrodes mobiles. Les plaques intermédiaires isolantes ainsi ajourées peuvent avantageusement être faites en un matériau plastique, tel que notamment du téflon ou du polyéthylène.

On voit par ailleurs que les fonctions remplies par ces deux plaques intermédiaires superposées ainsi ajourées sont multiples. Ces plaques intermédiaires constituent en effet un support très efficace, qui permet à la fois de prédéterminer très exactement la très faible épaisseur (de l'ordre de 150 $\mu$ ) de la couche de liquide opaque remplissant l'enceinte étanche, d'assurer le positionnement exact et l'encastrement solide des électrodes mobiles servant d'organe d'affichage, et de réaliser le montage et la connexion électrique des électrodes mobiles avec l'extérieur de l'enceinte d'une façon extrêmement simplifiée et facilement reproductible, ce qui permet entre autres d'augmenter la fiabilité de l'ensemble du dispositif d'affichage.

L'encastrement des électrodes mobiles entre ces deux plaques intermédiaires ajourées (c'est-à-dire selon une position médiane entre les deux plaques de base) présente en outre l'avantage majeur de permettre leur commutation d'une de leur position extrême stable à l'autre au moyen d'une flexion relativement réduite par rapport à leur position de repos intermédiaire (position médiane), réduisant ainsi l'effort et la déformation nécessaires, ce qui se traduit par un accroissement de leur résistance à la fatigue mécanique, et donc de leur fiabilité.

On a dit précédemment que les différentes électrodes mobiles du dispositif d'affichage selon l'invention se trouvaient par ailleurs encastrées entre les deux plaques intermédiaires ajourées par au moins une de leurs extrémités. De manière particulièrement avantageuse, ces extrémités d'électrodes mobiles destinées à permettre l'ancrage entre les plaques intermédiaires pourront être constituées par des "pattes de fixation" saillantes d'extension transversale notablement inférieure à celle des bords d'électrodes dont elles font saillie, de manière à réduire la résistance à la flexion de ces électrodes mobiles, et d'augmenter ainsi leur souplesse. De telles électrodes mobiles pourront ainsi à titre d'exemple comporter une patte de fixation unique faisant saillie du milieu de l'électrode, dans le cas d'électrodes mobiles d'extension transversale relativement réduite; ou bien au moins deux pattes de fixation faisant saillie à distance l'une de l'autre d'un même côté de l'électrode, dans le cas d'électrodes mobiles d'extension transversale relativement élevée; ou bien encore deux pattes de fixation faisant saillie de part et d'autre de l'électrode, dans le cas d'électrodes de forme longiligne. Il convient alors dans ce dernier cas de prévoir, pour cette électrode mobile longiligne ainsi encastrée par ses deux extrémités, une configuration telle que son centre de gravité soit situé hors de l'axe commun aux deux pattes de fixation, de façon à rendre encore possible le déplacement de cette électrode d'une plaque de base à l'autre malgré son encastrement par ses deux extrémités.

Les différentes électrodes mobiles du dispositif d'affichage selon l'invention sont en outre constituées avantageusement par des éléments métalliques plans transpercés d'une multiplicité de "microjours" susceptibles d'être traversés librement par le liquide opaque, de façon à conférer à ces électrodes mobiles une résistance au déplacement dans les fluides extrêmement réduite, ces éléments métalliques "microajourés" étant par ailleurs choisis les plus minces possibles de façon à ac- croître encore leur flexibilité. De telles électrodes mobiles "microajourées" peuvent, de manière particulièrement avantageuse, être constituées par un grillage très mince et souple se composant de fils métalliques entrelacés, un tel grillage pouvant à titre d'exemple être réalisé à l'aide des techniques de tissage. Un tel grillage peut en outre avantageusement être soumis à une opération de laminage additionnelle destinée à assurer l'aplatissement des fils constitutifs de la grille, de façon à permettre une meilleure application de cette dernière contre la plaque de base transparente (en vue d'améliorer les qualités optiques de la grille), cet aplatissement de la grille permettant en outre de lui conférer une épaisseur encore plus réduite, et donc d'accroître encore sa flexibilité.

La conception d'ensemble susmentionnée en ce qui concerne les électrodes mobiles - à savoir utilisation d'électrodes mobiles "microajourées" très minces pourvues de "pattes de fixation" d'extension transversale réduite ancrées en position médiane dans le dispositif d'affichage - présente l'avantage majeur, grâce à l'optimalisation des différentes caractéristiques mécaniques ainsi réalisée (accroissement maximal de la flexibilité combiné avec une réduction au minimum de l'amplitude de flexion, ainsi que réduction au minimum de la résistance de déplacement dans les fluides), de permettre la commutation de ces électrodes mobiles entre leurs positions extrêmes stables avec un effort minimum, ce qui se traduit ainsi notamment par une réduction au minimum de la force d'attraction, de la tension appliquée ainsi que du temps requis pour assurer cette commutation.

De manière particulièrement avantageuse, l'ensemble des électrodes mobiles pourvues de leurs pattes de fixation ainsi que l'ensemble des pistes de connexion de ces électrodes mobiles avec l'extérieur pourront par ailleurs, ainsi qu'on l'expliquera plus loin, être réalisées par découpage adéquat d'une feuille métallique "microajourée" d'un seul tenant.

Les faces des électrodes mobiles situées en regard de la plaque de base transparente doivent en outre présenter des caractéristiques optiques bien précises, en vue de permettre un affichage correct. Ces faces doivent ainsi nécessairement présenter une couleur qui contraste avec la couleur du liquide opaque remplissant le dispositif d'affichage, de façon que les électrodes plaquées contre la plaque de base transparente puissent se détacher nettement du point de vue couleur du "fond" de l'affichage constitué par le liquide opaque. Le liquide opaque et absorbant étant généralement de couleur foncée, les électrodes mobiles devront en conséquence s'inscrire généralement en "clair" sur "fond foncé". Les faces des électrodes mobiles en regard de la plaque de base transparente doivent ainsi présenter une surface qui soit à la fois hautement réfléchissante pour apparaître aussi lumineuses que possible au travers de la plaque transparente, et hautement diffusante pour être visibles sans reflet sous tous les angles d'observation. Le pouvoir hautement diffusant de cette surface peut à titre d'exemple être obtenu en conférant un aspect légèrement rugueux à cette surface (par exemple par trempe dans un bain d'acide, laquelle trempe est au demeurant nécessaire pour effectuer le dépôt galvanoplastique ci-après mentionné), cependant que le pouvoir hautement réfléchissant de cette surface peut être obtenu par déposition sur cette surface d'une couche mate d'argent (par exemple par galvanoplastie), le caractère mat de ce dépôt contribuant par ailleurs à accroître le pouvoir diffusant de la surface.

Le dépôt susmentionné de la couche mate d'argent a ainsi pour résultat de procurer une surface hautement réfléchissante et diffusante qui se présente sous un aspect "blanc". On peut néanmoins choisir de réaliser une surface qui se présente sous un aspect coloré au lieu de l'aspect "blanc" susmentionné, en prévoyant alors de déposer additionnellement une couche de la couleur désirée sur cette surface diffusante et réfléchissante d'aspect blanc. Cette couche colorée peut être choisie très mince (de l'ordre du micron), compte tenu du fait qu'elle doit agir seulement comme filtre (les caractéristiques de diffusion et de réflexion nécessaires à la "vision" de cette couleur étant en effet déjà présentes dans la surface sous-jacente hautement réfléchissante et diffusante). On peut également envisager à titre de variante de remplacer cette couche colorée par une couche fluorescente ou phosphorescente.

Dans le dispositif d'affichage selon l'invention, les moyens d'isolation servant à empêcher tout contact et passage de courant entre les électrodes fixes et les électrodes mobiles (lorsque ces dernières se trouvent dans l'une ou l'autre de leurs deux positions extrêmes stables) peuvent être constitués soit par une couche isolante recouvrant les deux faces de chacune des électrodes mobiles, soit préférentiellement, par une couche isolante recouvrant l'ensemble des électrodes fixes associées à chacune des plaques de base.

Le liquide opaque remplissant l'enceinte étanche du dispositif d'affichage selon l'invention doit lui aussi présenter un certain nombre de carctéristiques bien précises, en vue de permettre un affichage correct. Ce liquide, dont la couleur doit (ainsi que déjà mentionné) contraster avec celle de la face des électrodes mobiles située en regard de la fenêtre transparente, doit tout d'abord être aussi opaque et absorbant que possible, de façon à pouvoir masquer parfaitement celles des électrodes mobiles non situées en position d'affichage (un tel liquide pouvant avantageusement présenter un coefficient d'absorption optique au moins égal à 90 % dans le spectre visible). Ce liquide opaque doit ensuite préférentiellement être constitué par un liquide non polaire ayant un très grand pouvoir isolant, correspondant à une résistivité électrique au moins égale à $10^{12}$ ohm- cm à 20°C, de façon à permettre l'établissement d'un champ électrostatique capable d'assurer la commutation requise des organes d'affichage, tout en évitant le passage d'un courant d'électrolyse notable susceptible de former des produits de réaction indésirables pouvant entraver la visibilité à travers la plaque transparente et d'entraîner une consommation inutile d'énergie. Ce liquide opaque à résistivité élevée doit par ailleurs présenter une viscosité aussi faible que possible, de façon à permettre des vitesses de commutation élevées pour les organes d'affichage. Ce liquide opaque fortement isolant à faible viscosité doit enfin préférentiellement présenter une basse tension de vapeur, de façon à éviter des pertes de liquide par évaporation lors du remplissage de l'enceinte vidée d'air (lors de la fabrication), ainsi que la formation de bulles nuisibles à l'affichage lors d'un éventuel échauffement du dispositif.

Comme liquides opaques susceptibles de répondre aux caractéristiques requises, on pourra envisager avantageusement d'utiliser des liquides tels que des huiles isolantes, et notamment des huiles silicones qui sont caractérisées par une variation de la viscosité en fonction de la température beaucoup plus faible que pour toutes les autres huiles isolantes, ce qui permet d'étendre la gamme de température d'utilisation pour une gamme de viscosité donnée.

Comme huiles silicones possibles, on pourra ainsi à titre d'exemple utiliser une huile silicone (polyphenyl-polymethyl-polysiloxane) du type "DC 704", fabriquée par la firme Dow Corning Inc., une telle huile silicone étant par ailleurs rendue opaque en y dissolvant un agent colorant absorbant du type "Bleu Cérès" fabriqué par la firme Bayer Leverkusen. Cette huile silicone opaque est essentiellement de nature non polaire et présente divers avantages pratiques importants et notamment : son pouvoir isolant extrêmement élevé, qui correspond à une résistivité de l'ordre de $5 \times 10^{12}$ ohm-cm à température ambiante, son excellente stabilité dans une grande gamme de température comprise entre -20° et +100°C, sa viscosité relativement basse de l'ordre de 40 cst à 20°C et sa basse tension de vapeur (point d'ébullition supérieur à 200°C). Sa constante diélectrique $\varepsilon$ est de 2,8. On pourra également envisager à titre d'exemple d'utiliser des huiles silicones de type autre que celui sus- indiqué et notamment des huiles silicones présentant des viscosités aussi basses que 2 cst à 20°C, en vue d'obtenir des temps de commutation encore plus réduits. Il convient toutefois de remarquer qu'il ne s'avère pas forcément avantageux d'utiliser des huiles silicones trop fluides, étant donné que ces huiles risquent alors de devenir trop volatiles (la volatilité des huiles augmentant en effet avec leur fluidité).

Le dispositif d'affichage selon l'invention peut enfin être avantageusement complété par un masque convenablement ajouré de teinte identique à celle du liquide isolant opaque, disposé contre la face extérieure de la plaque transparente de façon à ne laisser apparaître que les parties mobiles des organes d'affichage appliquées contre la plaque transparente, et à occulter tous les éléments restants (notamment les pattes de fixation des organes d'affichage, les pistes de connexion de ces organes avec l'extérieur, ainsi que les portions non ajourées des plaques intermédiaires superposées). Un tel masque peut être constitué soit par une feuille indépendante convenablement ajourée plaquée contre la fenêtre transparente, soit par une simple couche de peinture appliquée directement sur cette fenêtre transparente. On peut également à titre de variante, dans le cas notamment d'affichage de très petites dimensions, envisager d'utiliser une fenêtre transparente composite comportant en superposition une plaque mince (de l'ordre de 200 microns), munie de son réseau d'électrodes transparentes et une plaque épaisse (de l'ordre de 2 mm) servant de support pour cette plaque mince, et prévoir alors d'interposer le masque susmentionné entre la plaque épaisse et la plaque mince au lieu de le disposer contre la surface extérieure comme précédemment, de façon à éviter des erreurs éventuelles de parallaxe.

Brève description des dessins

Le dessin annexé illustre, schématiquement et à titre d'exemple, plusieurs formes d'exécution ainsi que des variantes du dispositif d'affichage, objet de la présente invention.

La figure 1 est une vue schématique en coupe transversale d'une cellule d'affichage élémentaire du dispositif d'affichage selon l'invention permettant d'en illustrer son principe de fonctionnement.

La figure 2 est une vue en perspective partielle, illustrant une première forme d'exécution.

La figure 3 est une vue en coupe selon l'axe III-III de la figure 2.

La figure 4 est une vue en coupe selon l'axe IV-IV de la figure 2.

Les figures 5 et 6 sont deux vues de dessus, partielles, d'éléments de détail de la figure 2.

La figure 7 est une vue de dessus simplifiée de la figure 2, illustrant le fonctionnement de cette première forme d'exécution.

Les figures 8 et 9 sont deux vues analogues à celles des figures 5 et 6, illustrant une variante.

La figure 10 est une vue en perspective partielle analogue à celle de la figure 2, illustrant une seconde forme d'exécution.

La figure 11 est une vue de dessus simplifiée de la figure 10, illustrant le fonctionnement de cette seconde forme d'exécution.

La figure 12 est une vue de dessus simplifiée analogue à celle des figures 7 et 11, illustrant une troisième forme d'exécution.

Les figures 13 à 18 sont des vues explicatives d'une forme de mise en oeuvre d'un procédé de fabrication de la première forme d'exécution des figures 2 à 7, les figures 13 à 16 étant des vues de dessus des différents éléments constitutifs de cette forme d'exécution avant assemblage, et la figure 18 étant une vue en coupe, selon l'axe AA des figures 13 à 16, des mêmes éléments constitutifs après assemblage (la figure 17 étant quant à elle une vue en coupe selon l'axe AA de la figure 13).

<u>Meilleures manières de réaliser l'invention</u>

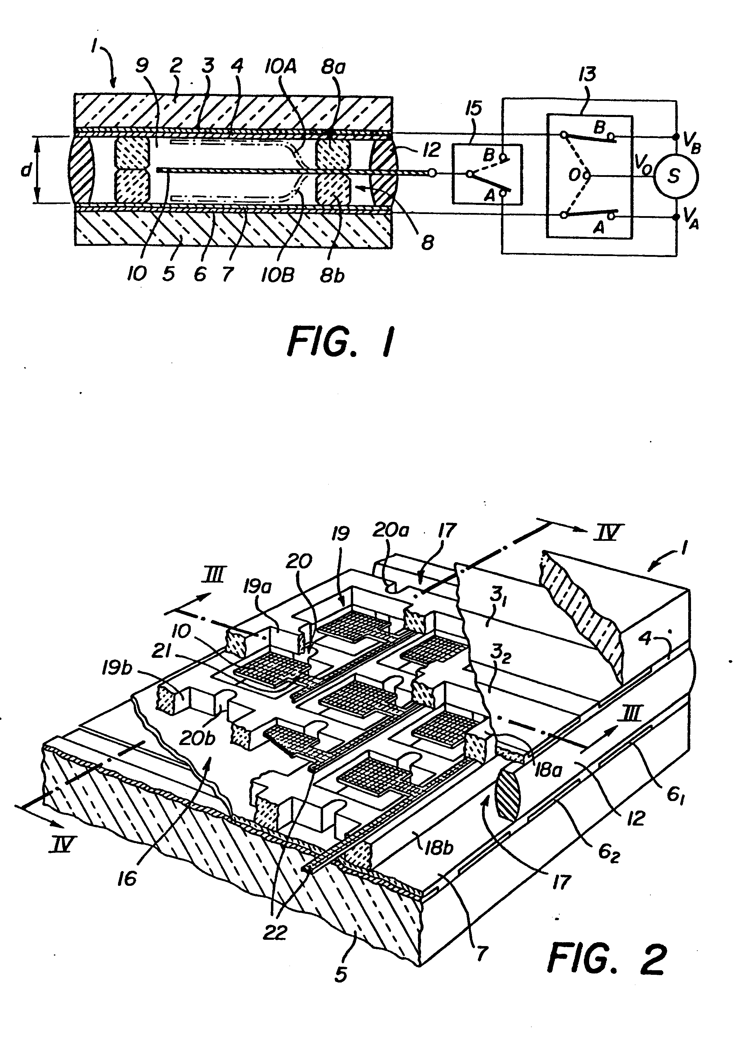

La figure 1 est une vue schématique d'une cellule d'affichage élémentaire du dispositif d'affichage selon l'invention, permettant d'en expliquer son principe de fonctionnement. La cellule d'affichage représentée sur cette figure 1 comprend, respectivement, une fenêtre transparente 1 formée d'une plaque plan parallèle 2 de verre dont la surface externe est destinée à recevoir la lumière incidente et dont la surface interne porte une première électrode fixe transparente 3 protégée par un revêtement isolant 4 également transparent; une plaque de base 5 portant une seconde électrode fixe 6 disposée en regard et à distance de la première électrode 3 et protégée par un revêtement isolant 7; un joint d'étanchéité 12 délimitant en coopération avec la fenêtre 1 et la plaque 5 une enceinte étanche 9; une entretoise 8 interposée dans l'enceinte 9 entre la fenêtre 1 et la plaque 5, se composant de deux parties similaires superposées 8a et 8b, découpées dans une feuille mince de polyéthylène ou de téflon; et une électrode mobile 10 destinée à servir d'organe d'affichage proprement dit, constituée par un élément de grille métallique très mince, cette électrode mobile 10 s'étendant dans l'enceinte 9 tout en étant encastrée par l'une de ses extrémités (extrémités droite au dessin) entre les parties 8a et 8b de l'entretoise 8, laquelle extrémité vient par ailleurs faire saillie hors de l'enceinte 9, au travers du joint d'étanchéité 12.

L'enceinte étanche 9 est remplie d'un liquide opaque non polaire à très haute résistivité électrique, un tel liquide pouvant à titre d'exemple être constitué par l'huile silicone du type "DC 704" précédemment mentionnée, rendue opaque par dissolution de l'agent colorant absorbant du type "Bleu Cérès". La hauteur "$\underline{d}$" de l'enceinte, qui est déterminée par l'entretoise 8 séparant les revêtements isolants respectifs 4 et 7 de la fenêtre 1 et de la plaque 5, est choisie de façon à être de l'ordre de 150 $\mu$, cependant que les électrodes fixes respectives 3 et 6 ainsi que les revêtements isolants respectifs 4 et 7 présentent une épaisseur de l'ordre de 1 $\mu$. (L'enceinte n'a donc pas été représentée à l'échelle au dessin, cela dans le but de pouvoir mieux illustrer le fonctionnement de la cellule). Les électrodes fixes 3 et 6 sont formées chacune d'une couche conductrice transparente d'oxyde mixte d'indium et d'étain présentant une résistance spécifique de surface de 50 ohm (par carré), cette couche pouvant avoir été déposée par une technique de déposition en phase gazeuse (CVD). Les revêtements isolants 4 et 7 sont quant à eux formés par une couche transparente de $SiO_2$, cette couche pouvant avoir été déposée par une technique d'évaporation sous vide.

La grille métallique 10 constituant l'organe d'affichage proprement dit est formée à titre d'exemple de fils inox de 25 $\mu$ d'épaisseur avec une densité de 200 mailles/cm, cette grille ayant été au préalable soumise à une opération de laminage destinée à aplatir les fils d'inox tissés, et la surface de cette grille située en regard de la fenêtre 1 ayant en outre été revêtue d'une couche mate d'argent destinée à lui conférer un haut pouvoir réfléchissant et diffusant.

La grille métallique 10 est destinée, ainsi que cela sera expliqué ci-après, à être défléchie par des forces d'attraction électrostatiques résultant de l'application de potentiels appropriés sur les électrodes fixes 3 et 6 et sur la grille 10 entre une première position extrême stable 10A (représentée en pointillés au dessin) pour laquelle elle vient se plaquer contre la fe- nêtre transparente 1, permettant ainsi sa vision au travers de cette fenêtre, et une seconde position extrême stable 10B (également représentée en pointillés au dessin) pour laquelle elle vient se plaquer contre la plaque de base 5, entraînant ainsi son occultation par le liquide opaque. Ces première et seconde positions extrêmes stables 10A et 10B pourront être respectivement désignées par les termes "position d'affichage" et "position hors affichage" dans la suite de l'exposé. Cette grille métallique 10 est par ailleurs susceptible d'occuper la position de repos intermédiaire représentée en traits pleins au dessin lorsqu'elle ne se trouve soumise à aucune force électrostatique.

La présence des couches isolantes 4 et 7 sur les électrodes fixes respectives 3 et 6 a pour fonction d'empêcher tout contact et passage de courant (court-circuit) entre ces électrodes fixes et la grille 10, lorsque cette dernière se trouve située dans sa "position d'affichage" ou dans sa "position hors affichage".

L'application des potentiels appropriés sur les électrodes respectives 3,6 et 10 de la cellule d'affichage sus-décrite est susceptible d'être réalisée en reliant ces électrodes par l'intermédiaire de commutateurs 13 et 15, de la façon indiquée à la figure 1, aux pôles respectifs B,O et A d'une source de tension S à trois pôles capable de délivrer les tensions respectives $V_B$, $V_O$ et $V_A$ telles que $V_B > V_O > V_A$, (par exemple $V_B$ = +50 Volts, $V_O$ = 0 Volt et $V_A$ = -50 Volts). Le premier commutateur 13 (commutateur double) a pour fonction d'appliquer sur les électrodes fixes respectives 3 et 6, soit les potentiels respectifs $V_B$ et $V_A$ lorsqu'il se trouve dans la position indiquée en traits pleins au dessin (les électrodes fixes 3 et 6 se trouvant alors dans un état dit "excité"), soit le potentiel commun $V_O$ lorsqu'il se trouve dans la position indiquée en traits mixtes au dessin (les électrodes fixes 3 et 6 se trouvant alors dans un état dit "non excité"). Le second commutateur 15 (commutateur simple) a quant à lui pour fonction d'appliquer sur la grille 10, soit le

potentiel $V_A$ lorsqu'il se trouve dans la position indiquée en traits pleins au dessin, soit le potentiel $V_B$ lorsqu'il se trouve dans la position indiquée en traits mixtes au dessin.

Le fonctionnement de la cellule d'affichage ainsi reliée à la source S est alors le suivant (deux cas à considérer selon que les électrodes fixes sont ou non excitées) :

a) Electrodes fixes "excitées"

Les électrodes fixes 3 et 6 se trouvant initialement dans leur état dit "excité" (c'est-à-dire initialement soumises aux potentiels respectifs $V_B$ et $V_A$), la grille mobile 10 est à titre d'exemple portée au potentiel $V_A$ à l'aide du commutateur 15. La grille 10 se trouvant alors au même potentiel que l'électrode de base 6, il ne s'établit aucun champ électrostatique entre ces électrodes. Cette grille 10 se trouvant par contre soumise à un potentiel différent de celui appliqué sur l'électrode de fenêtre 3, il s'établit alors entre cette électrode 3 et la grille 10 un champ électrostatique élevé, qui a pour effet d'entraîner l'application sur cette grille mobile 10 d'une force d'attraction électrostatique suffisante pour amener la grille 10 en "position d'affichage" 10A contre la fenêtre transparente 1, et pour l'y maintenir de manière permanente dans cette position (force d'attraction électrostatique inversément proportionnelle au carré de la distance entre électrodes).

Les électrodes fixes 3 et 6 étant toujours dans leur état dit "excité", supposons maintenant que la grille 10 soit portée au moment voulu au potentiel $V_B$ par inversion du commutateur 15. Cette grille 10 se trouvant ainsi maintenant soumise à un potentiel différent de celui de l'électrode de base 6, il s'établit alors un champ électrostatique élevé entre cette électrode 6 et la grille 10, d'où il en résulte l'application sur cette grille 10 d'une force d'attraction électrostatique suffisante pour amener la grille 10 en position "hors affichage" 10B contre la plaque de base 5, et pour l'y maintenir de manière permanente dans cette position (la force d'attraction électrostatique antérieure de la grille 10 contre l'électrode de fenêtre 3 ayant parallèlement cessé de s'appliquer puisque ces deux électrodes se trouvent maintenant au même potentiel).

On voit donc que, lorsque les électrodes fixes 3 et 6 se trouvent maintenues dans leur état dit "excité", la grille 10 peut être commutée à volonté dans l'une ou l'autre de ses positions extrêmes stables, à savoir position d'affichage 10A ou position hors affichage 10B, par simple application sur cette grille 10 des potentiels respectifs $V_A$ ou $V_B$.

b) Electrodes fixes "non excitées"

Les électrodes fixes 3 et 6 se trouvant initialement dans leur état dit "excité" et la grille mobile 10 étant à titre d'exemple soumise au potentiel $V_A$ (cette grille 10 se trouvant alors maintenue dans sa position d'affichage 10A ainsi qu'expliqué précédemment), supposons maintenant que les électrodes fixes 3 et 6 sont amenées dans leur état dit "non excité", pour lequel elles se trouvent alors portées au potentiel commun $V_O$. La grille 10 se trouvant ainsi maintenant soumise à un potentiel différent. de celui des deux électrodes fixes 3 et 6, il en résulte alors l'application sur cette grille 10 de deux forces d'attraction électrostatiques antagonistes, dont la résultante est cependant telle qu'elle continue à maintenir comme précédemment la grille 10 dans sa position d'affichage antérieure 10A (la force d'attraction tendant à maintenir la grille dans la position d'affichage 10A étant en effet de beaucoup supérieure à celle tendant à l'attirer dans l'autre position 10B étant donné dans ce cas la faible distance ($\sim 1\mu$) entre la grille et l'électrode de fenêtre 3 et la relativement grande distance (150 $\mu$) entre la grille et l'électrode de base 6).

Les électrodes fixes 3 et 6 étant toujours maintenues dans l'état "non excité" susmentionné, supposons par ailleurs que la grille 10 soit maintenant portée au potentiel $V_B$ par inversion du commutateur 15. Il en résulte encore l'application sur cette grille 10 de deux forces d'attraction antagonistes dont la résultante est toujours telle qu'elle continue à maintenir la grille 10 dans sa position d'affichage 10A.

On constate donc que, la grille 10 ayant été amenée dans l'une ou l'autre de ses positions stables au moment où les électrodes fixes 3 et 6 se trouvent dans leur état dit "excité", cette grille continue ensuite à rester, par une sorte d'effet de "mémoire", dans la même position stable après désexcitation de ces électrodes fixes, et ceci quel que soit le potentiel ($V_A$ ou $V_B$) qui est alors appliqué à cette grille 10.

La source de tension S à laquelle se trouve reliée la cellule d'affichage selon l'invention peut être aussi bien continue qu'alternative, le fonctionnement susdécrit restant identique dans les deux cas.

Dans le cas des tensions alternatives, les couches isolantes 4 et 7 pourront être beaucoup plus isolantes que le liquide opaque (par exemple en silice déposée par procédé CVD silox, ce qui donne une résistivité de l'ordre de $10^{18}$ ohm-cm). Dans le cas des tensions continues, les couches isolantes 4 et 7 devront présenter une résistance élevée (pour limiter le courant dans les organes d'affichage et les électrodes) mais pas sensiblement plus élevée que le liquide opaque isolant. On peut obtenir ce résultat au moyen de couches de silice légèrement poreuses, déposées par évaporation sous vide, ou déposées par CVD en présence d'une impureté dopante comme le bore ou le phosphore.

Les figures 2 à 7 illustrent une première forme d'exécution du dispositif d'affichage selon l'invention, suivant laquelle les électrodes mobiles destinées à servir d'organes d'affichage proprement dits sont agencées selon un réseau matriciel de lignes et de colonnes.

Le dispositif représenté sur ces figures 2 à 7 comprend une fenêtre transparente 1 (formée d'une plaque plan parallèle en verre 2) et une plaque de base isolante 5 disposées en regard et à distance l'une de l'autre, délimitant en coopération avec un joint d'étanchéité périphérique 12 une enceinte étanche 16 (les faces internes de la fenêtre 1 et de la plaque de base 5 étant par ailleurs respectivement pourvues, ainsi qu'il sera expliqué plus en détail ci-après, de réseaux d'électrodes respectifs $3_1$ à $3_n$ et $6_1$ à $6_n$ protégés par les revêtements isolants respectifs 4 et 7).

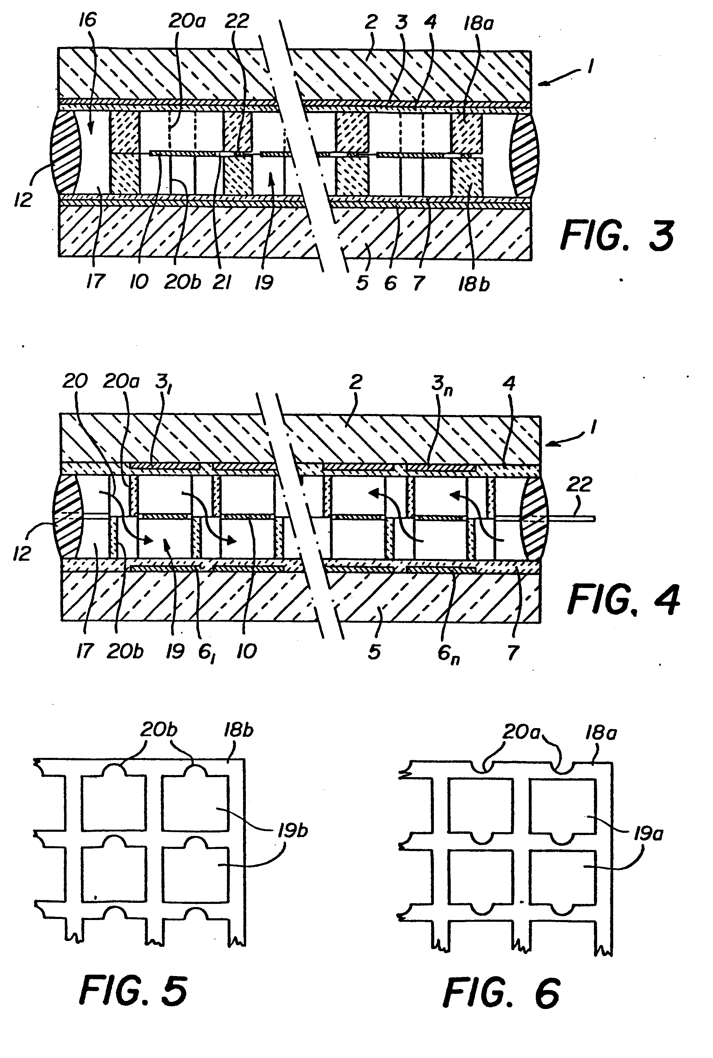

L'enceinte étanche 16 contient deux plaques intermédiaires isolantes superposées 18a et 18b de sensiblement même épaisseur, interposées entre la fenêtre 1 et la plaque de base 5 de façon à maintenir un écartement prédéterminé (de l'ordre de 150 $\mu$) entre ces dernières. Ces plaques intermédiaires superposées 18a et 18b présentent une extension inférieure à celles de la fenêtre 1 et de la plaque de base 5, de façon à délimiter un canal périphérique 17 entre leur pourtour extérieur et le joint périphérique 12. Chacune des plaques intermédiaires 18a et 18b (fig. 5 et 6) se trouve par ailleurs ajourée de façon à présenter une pluralité d'ouvertures rectangulaires distribuées selon un réseau de lignes et de colonnes, respectivement la pluralité d'ouvertures 19a pour la plaque 18a et la pluralité d'ouvertures 19b pour la plaque 18b, ces pluralités d'ouvertures 19a et 19b étant agencées l'une par rapport à l'autre sur les plaques respectives 18a et 18b de façon que ces dernières délimitent en superposition l'une avec l'autre une pluralité de jours transversaux 19 (fig.2 à 4) qui s'étendent sans entraves de la fenêtre 1 à la plaque de base 5. Dans ceux des bords des ouvertures rectangulaires respectives 19a et 19b qui s'étendent parallèlement à l'axe III-III au dessin se trouvent en outre ménagées (fig.5 et 6) des encoches transversales respectives 20a et 20b dont la profondeur (dans le sens de l'axe IV-IV au dessin) est choisie sensiblement égale aux deux-tiers de la largeur de ces bords, ces encoches transversales respectives 20a et 20b étant par ailleurs agencées, pour deux bords superposés, respectivement de part et d'autre de ces bords superposés, de façon à délimiter par chevauchement partiel (sur environ 1/3 de la largeur des bords) une pluralité de passages 20 permettant d'établir une libre communication entre les différents jours transversaux 19 et/ou le canal périphérique 17 (fig.4).

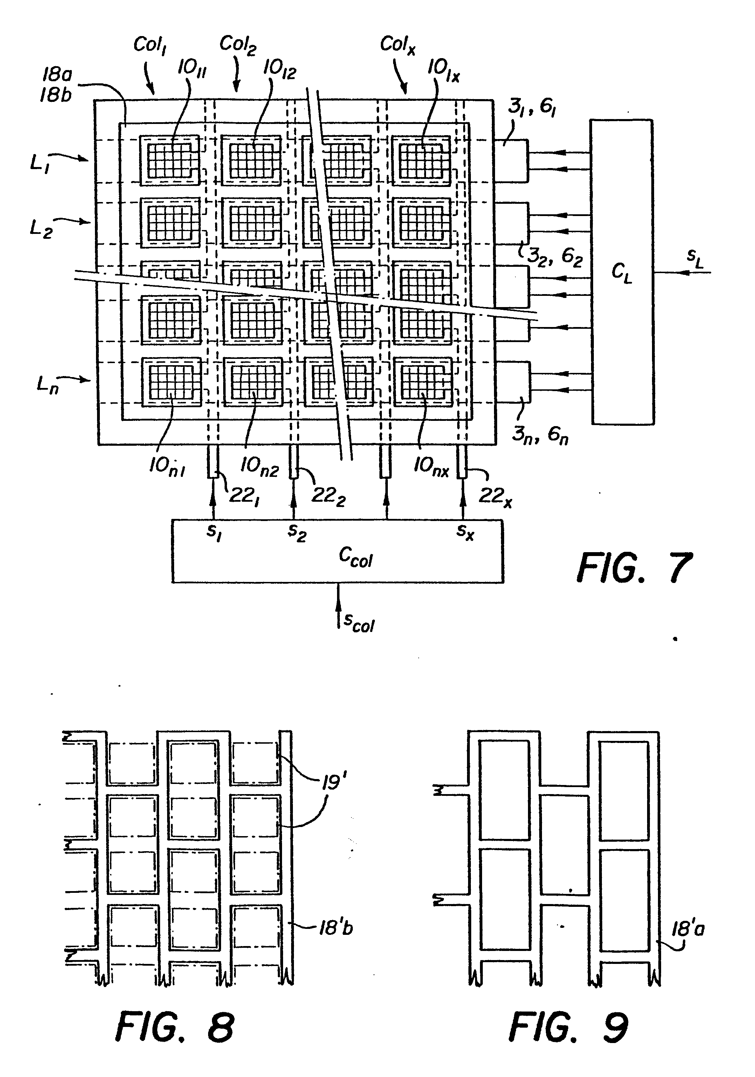

A l'intérieur des différents jours transversaux 19 se trouvent disposées (fig.2) des grilles métalliques 10 de forme rectangulaire pourvues chacune d'une patte de fixation 21, ces différentes grilles métalliques 10 se trouvant par ailleurs encastrées par l'intermédiaire de leurs pattes de fixation 21 entre celles des portions voisines non ajourées des plaques intermédiaires 18a et 18b qui s'étendent parallèlement à l'axe IV-IV au dessin. L'ensemble de ces grilles 10 se trouve ainsi réparti, ainsi que cela ressort de la figure 7, selon un réseau matriciel de lignes $L_1$ à $L_n$ et de colonnes $Col_1$ à $Col_x$ (ces lignes et ces colonnes s'étendant ainsi respectivement, à la figure 2, selon des directions respectivement parallèles à l'axe III-III et à l'axe IV-IV).

Pour la clarté de l'exposé, chaque grille 10 de ce réseau matriciel sera, lors de l'explication relative au fonctionnement, affectée d'un double indice, respectivement un premier indice représentant la ligne correspondante $L_1$ à $L_n$, et un second indice représentant la colonne correspondante $Col_1$ à $Col_x$.

Les grilles 10 appartenant à une même colonne se trouvent reliées par l'intermédiaire de leurs pattes de fixation 21 à une piste conductrice commune 22 également intercalée entre les plaques intermédiaires superposées 18a et 18b, l'ensemble des pistes conductrices $22_1$ à $22_x$ ainsi associées aux différentes colonnes de grilles s'étendant par ailleurs le long de ces colonnes, entre les portions non ajourées correspondantes des plaques 18a et 18b, d'un bord à l'autre de ces plaques jusqu'à venir déboucher par chacune de leurs extrémités (fig.4) au travers du joint d'étanchéité 12. Ces pistes conductrices $22_1$ à $22_x$ seront désignées par le terme "conducteurs de colonne" dans la suite de l'exposé.

La face interne de la fenêtre 1 porte, ainsi qu'annoncé plus haut, une pluralité de bandes conductrices transparentes parallèles $3_1$ à $3_n$, qui s'étendent respectivement au droit de chacune des lignes de grille $L_1$ à $L_n$ jusqu'à venir affleurer l'extérieur de l'enceinte étanche 16, l'ensemble de ces bandes conductrices $3_1$ à $3_n$ étant par ailleurs recouvert par une couche isolante unique 4. De manière analogue, la face interne de la plaque de base 5 porte une pluralité de bandes conductrices parallèles $6_1$ à $6_n$, qui s'étendent également respectivement au droit de chacune des lignes de grilles $L_1$ à $L_n$ jusqu'à venir affleurer l'extérieur de l'enceinte étanche 16, l'ensemble de ces bandes conductrices $6_1$ à $6_n$ étant par ailleurs recouvert par une couche isolante unique 7.

Les paires de bandes conductrices respectives $3_1$, $6_1$ à $3_n,6_n$ sont ainsi destinées à constituer des paires d'"électrodes de lignes" chargées d'assurer la commutation "ligne par ligne" des différentes grilles 10 constitutives du réseau matriciel.

Le dispositif d'affichage qui vient d'être décrit est enfin rempli d'un liquide opaque non polaire à très haute résistivité électrique tel que celui précédemment indiqué. Les grilles métalliques 10 équipant ce dispositif sont quant à elles analogues à celle précédemment décrite à la figure 1, leur face située en regard de la fenêtre transparente étant notamment revêtue d'une couche mate d'argent destinée à leur conférer un haut pouvoir réfléchissant et diffusant.

Ainsi que cela ressort en outre de la figure 7, les différentes paires d'électrodes de ligne $3_1,6_1$ à $3_n$, $6_n$ sont individuellement reliées à un circuit de commande de lignes $C_L$, cependant que les différents conducteurs de colonne $14_1$ à $14_x$ sont individuellement reliés à un circuit de commande de colonnes $C_{col}$.

Le circuit de commande de lignes $C_L$ a pour fonction d'assurer, sous la commande d'un signal de décalage de ligne $s_L$, l'excitation séquentielle des différentes paires d'électrodes de ligne $3_1,6_1$ à $3_n,6_n$, c'est-à-dire l'application séquentielle sur ces différentes paires d'élec-

trodes de lignes de potentiels respectifs $V_A$ et $V_B$, les autres paires d'électrodes de lignes non excitées étant par ailleurs maintenues à un potentiel commun $V_O$ intermédiaire entre ces potentiels $V_A$ et $V_B$ (potentiels $V_A$, $V_O$ et $V_B$ identiques à ceux relatifs à la figure 1). Le circuit de commande de colonnes $C_{col}$ a quant à lui pour fonction d'assurer, sous la commande d'un signal de commande $s_{col}$, l'application sélective sur les différents conducteurs de colonnes $14_1$ à $14_x$ de l'un ou l'autre des deux potentiels $V_A$ et $V_B$.

Le fonctionnement du dispositif qui vient d'être décrit est alors le suivant :

La première paire d'électrodes de lignes $3_1, 6_1$ étant portée dans son état "excité" par le circuit de commande $C_L$ et toutes les autres paires d'électrodes de lignes $3_2, 6_2$ à $3_n, 6_n$ étant maintenues dans leur état "non excité" par ce même circuit $C_L$, le circuit de commande de colonnes $C_{col}$ procède alors à l'application sélective des potentiels $V_A$ ou $V_B$ sur les différents conducteurs de colonne $14_1$ à $14_x$, ce qui a pour effet de provoquer la commutation sélective des différentes grilles $10_{11}$ à $10_{1x}$ de la première ligne $L_1$ dans l'une ou l'autre de leurs deux positions "affichage" ou "hors affichage", selon le signal de commande $s_{col}$ injecté dans ce circuit $C_{col}$. L'application sélective de ces potentiels $V_A$ ou $V_B$ reste par ailleurs sans effet sur les grilles des autres lignes $L_2$ à $L_n$, étant donné que les paires d'électrodes de ligne associées à ces dernières se trouvent alors dans leur état non excité.

Le circuit de commande $C_L$ poursuivant ensuite séquentiellement l'excitation des autres lignes $L_2$ à $L_n$, les grilles appartenant à ces autres lignes $L_2$ à $L_n$ peuvent à leur tour être commutées sélectivement dans l'une ou l'autre de leurs deux positions "affichage" ou "hors-affichage", selon le signal de commande $s_{col}$ qui se trouve alors injecté dans le circuit $C_{col}$.

L'ensemble des grilles des différentes lignes $L_1$ à $L_n$ ayant été ainsi commuté dans leur position désirée, ces grilles gardent ensuite leur position acquise après desexcitation complète des différentes lignes, étant donné l'effet de "mémoire" précédemment expliqué (effet de "mémoire" opérant aussi longtemps qu'un potentiel différent de $V_O$ reste appliqué sur les différents conducteurs de colonne $14_1$ à $14_x$).

On voit donc que l'excitation séquentielle des lignes $L_1$ à $L_n$ permet de faire apparaître à travers la fenêtre transparente du dispositif un affichage visuel susceptible de présenter n'importe quelle configuration désirée (par exemple alphanumérique), cet affichage visuel se trouvant par ailleurs maintenu après desexcitation de l'ensemble des lignes. Ces lignes sont à nouveau séquentiellement excitées lorsqu'on désire faire apparaître un nouvel affichage sur le dispositif.

La configuration d'ajourage adoptée ci-dessus en ce qui concerne les plaques intermédiaires superposées 18a et 18b n'est évidemment pas la seule possible, et d'autres configurations d'ajourage peuvent tout aussi bien être envisagées pour ces plaques intermédiaires, telle que celle illustrée à titre d'exemple aux figures 8 et 9. Ces figures 8 et 9 montrent des plaques intermédiaires 18a' et 18b' qui se trouvent ajourées selon une configuration sensiblement différente de celle des figures 5 et 6, cette configuration restant cependant telle que ces plaques continuent à délimiter, en superposition, une pluralité de jours transversaux 19' (représentés en pointillés à la figure 8) capables de s'étendre sans entraves de la plaque de base à la fenêtre transparente tout en restant en libre communication les uns avec les autres et/ou avec le canal périphérique (ces jours transversaux 19' étant destinés à être occupés par des grilles métalliques 10 ainsi que précédemment).

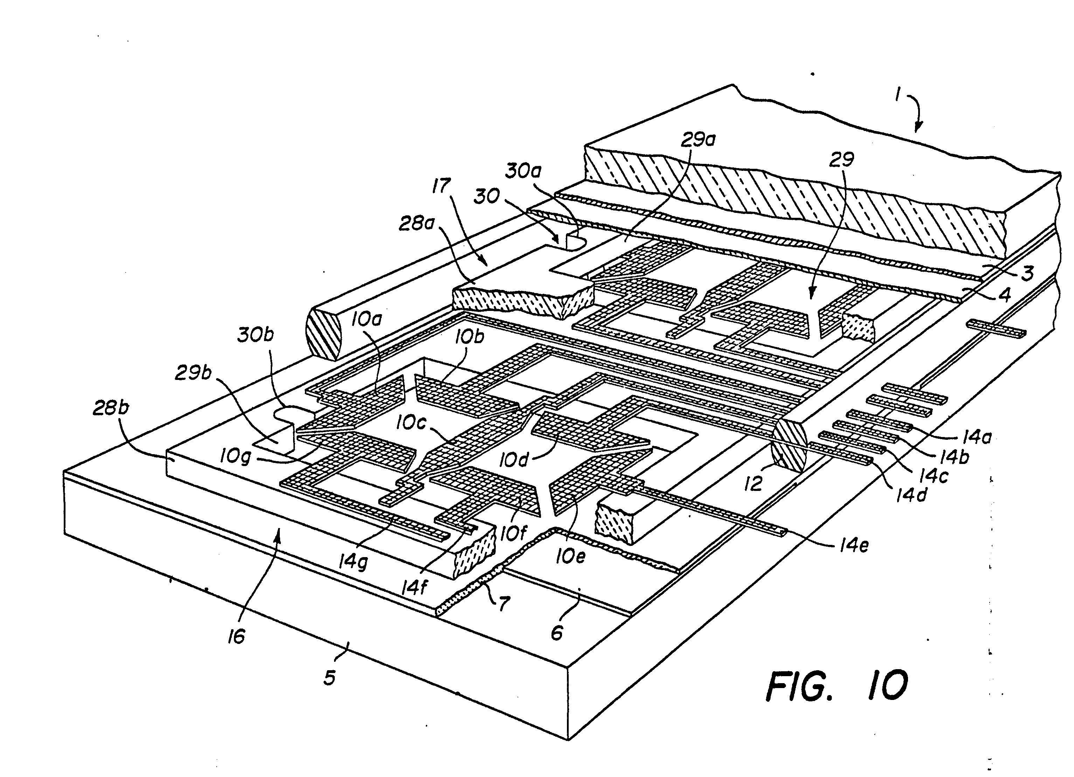

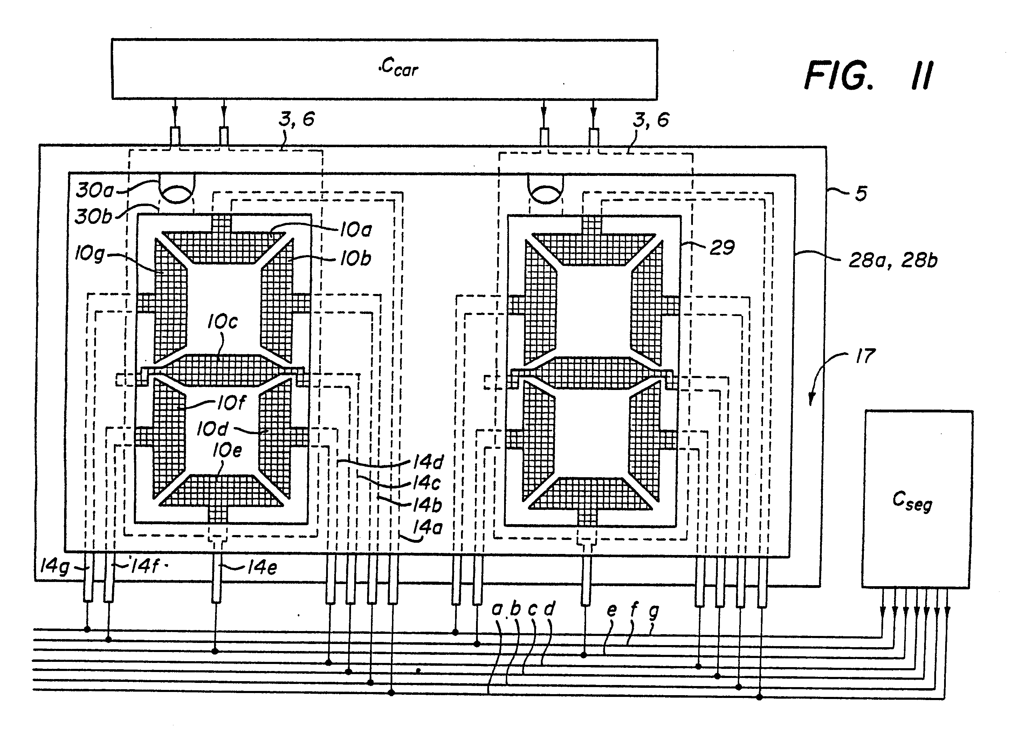

Les figures 10 et 11 illustrent une seconde forme d'exécution du dispositif d'affichage selon l'invention, suivant laquelle les électrodes mobiles destinées à servir d'organes d'affichage proprement dits sont agencées sous la forme d'une pluralité d'unités d'affichage à sept segments. Le dispositif représenté sur ces figures 10 et 11 comporte seulement deux unités d'affichage afin de simplifier le dessin, mais il est entendu que la description ci-après dudit dispositif peut également s'appliquer de façon analogue à tout autre nombre d'unités d'affichage (les éléments de ce dispositif qui sont identiques à ceux déjà décrits aux figures 1 à 9 restant par ailleurs affectés des mêmes signes de référence au dessin).

Le dispositif représenté sur ces figures 10 et 11 comprend une fenêtre transparente 1 et une plaque de base 5 disposées en regard et à distance l'une de l'autre, délimitant une enceinte étanche 16 en coopération avec un joint périphérique 12. L'enceinte étanche 16 contient deux plaques intermédiaires isolantes superposées 28a et 28b interposées entre la fenêtre 1 et la plaque de base 5, ces plaques intermédiaires ayant par ailleurs une extension inférieure à celle de ces dernières de façon à ménager un canal périphérique 17. Chacune de ces plaques intermédiaires 28a et 28b se trouve par ailleurs ajourée de façon à présenter une paire d'ouvertures restangulaires distantes l'une de l'autre, à savoir les deux ouvertures 29a sur la plaque 28a et les deux ouvertures 29b sur la plaque 28b, ces deux paires d'ouvertures étant par ailleurs agencées l'une par rapport à l'autre sur les plaques respectives 28a et 28b de façon que ces dernières délimitent en superposition deux jours transversaux 29 s'étendant sans entraves de la fenêtre 1 à la plaque de base 5. Dans les bords arrière des différentes ouvertures 28a et 28b se trouvent par ailleurs ménagées des encoches respectives 30a et 30b, agencées les unes par rapport aux autres dans ces bords superposés (de manière analogue à celle précédemment décrite aux figures 2 à 7) de façon à délimiter par chevauchement partiel deux passages 30 permettant d'établir une libre communication entre chacun des deux jours transversaux 29 et le canal périphérique 17.

A l'intérieur de chacun des deux jours transversaux 29 se trouve disposés sept segments de grille 10a à 10g pourvus chacun d'une patte de fixation 21 (à l'exception du segment 10c, qui comporte une patte de fixation 21 à chacune de ses extrémités), ces différents segments de grille 10a à 10g se trouvant par ailleurs encastrés par l'intermédiaire de leurs pattes de fixation 21 entre les portions voisines non ajourées des plaques intermédiaires 28a et 28b. Ces sept segments de grille 10a à 10g présentent en plan une disposition relative bien connue (sept segments formant une figure "8") qui permet de former sélectivement divers caractères numériques, par un affichage sélectif de ces sept segments (Ces unités d'affichage à sept segments pouvant de manière optionnelle comporter un huitième segment agencé de façon à pouvoir afficher un point).

Afin de permettre cet affichage sélectif, les sept segments 10a à 10g sont reliés individuellement par l'intermédiaire de leurs pattes de fixation 21 à sept conducteurs électriques correspondants 14a à 14g également intercalés entre les plaques intermédiaires 28a et 28b, ces conducteurs 14a à 14g s'étendant de façon appropriée entre ces plaques jusqu'à venir déboucher au travers du joint d'étanchéité 12.

La face interne de la fenêtre 1 porte en outre deux. électrodes rectangulaires transparentes 3, qui s'étendent respectivement au droit de chacun des deux jours transversaux 29 tout en débordant de ces jours par l'un de leurs côtés jusqu'à venir affleurer l'extérieur de l'enceinte étanche 16, ces deux électrodes 3 étant par ailleurs recouvertes par une couche isolante unique 4. De manière analogue, la plaque de base 5 porte deux électrodes rectangulaires 6 qui s'étendent respectivement au droit des deux électrodes précédentes 3 (ces électrodes 6 viennent donc affleurer également l'extérieur de l'enceinte étanche 16), ces deux électrodes 6 étant par ailleurs recouvertes par une couche isolante unique 7.

Le dispositif d'affichage sus-décrit est enfin rempli d'un liquide opaque non polaire à très haute résistivité électrique tel que celui précédemment indiqué, les éléments de grille métallique 10a à10g étant par ailleurs analogues à ceux précédemment décrits.

Ainsi que cela ressort de la figure 11, les électrodes fixes 3 et 6 de chaque unité d'affichage sont individuellement reliées à un circuit de commande de caractères $C_{car}$, chargé d'assurer l'"excitation" (délivrance des potentiels respectifs $V_A$ et $V_B$) ou la "non excitation" (délivrance du potentiel commun $V_O$) de ces électrodes fixes 3 et 6.

Les différents conducteurs 14a à 14g de chaque unité d'affichage sont par ailleurs respectivement reliés, par l'intermédiaire de lignes communes "a" à "g", à un circuit de commande de segments $C_{seg}$, chargé d'assurer l'application sélective sur ces différents conducteurs 14a à 14g de l'un ou l'autre des deux potentiels $V_A$ et $V_B$.

Le fonctionnement du dispositif sus-décrit est dès lors aisément compréhensible :

Les électrodes fixes 3 et 6 de l'une des unités d'affichage étant portées dans leur état d'excitation à l'aide du circuit $C_{car}$ (les électrodes 3 et 6 de l'autre unité restant par ailleurs non excitées), l'autre circuit $C_{seg}$ procède alors à l'application sélective des potentiels désirés $V_A$ ou $V_B$ sur les conducteurs respectifs $\underline{a}$ à $\underline{g}$, ce qui a pour effet de provoquer la commutation sélective (selon le caractère que l'on désire afficher) des différents segments 10a à 10g de l'unité d'affichage excitée, l'application des potentiels $V_A$ et $V_B$ susmentionnés sur les conducteurs respectifs $\underline{a}$ à $\underline{g}$ restant par ailleurs sans effet sur l'autre unité d'affichage non excitée. Le caractère désiré ayant été ainsi inscrit sur cette unité excitée on procède alors à sa désexcitation, le caractère inscrit continuant ensuite à garder sa position du fait de l'effet de "mémoire" sus-indiqué. On peut alors procéder de manière analogue avec l'autre unité d'affichage, en vue d'y inscrire le caractère désiré.

On comprend ainsi aisément, d'après tout ce qui précède, que le dispositif d'affichage selon l'invention peut être conçu selon les agencements d'organes d'affichage les plus divers.

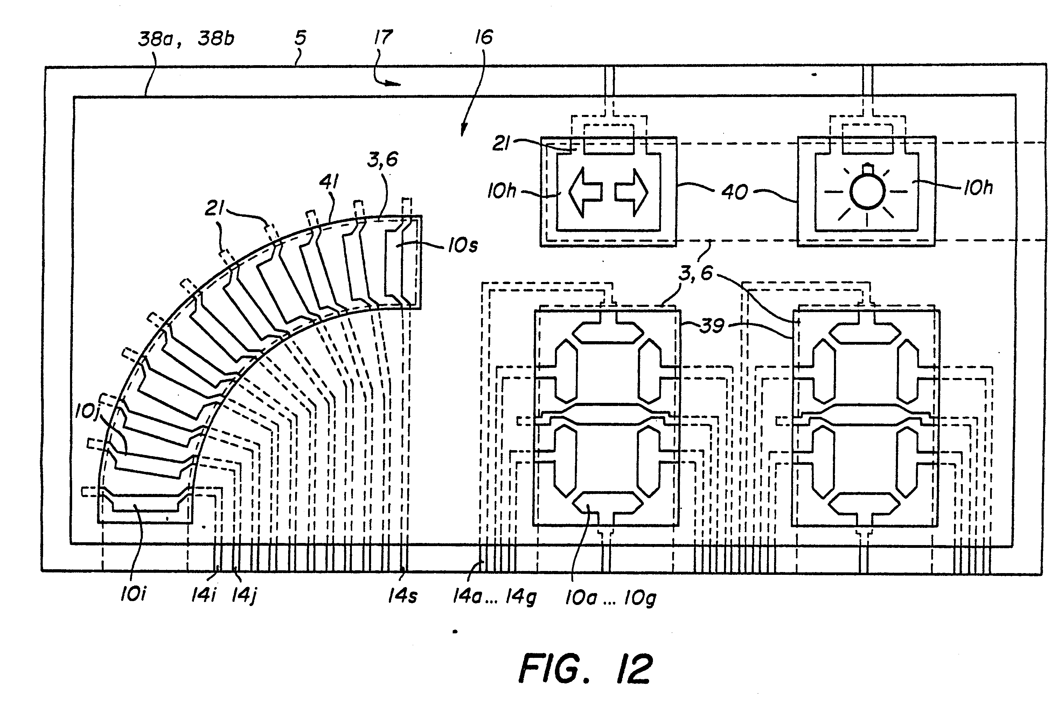

La troisième forme d'exécution représentée de manière simplifiée à la figure 12 illustre une des ces possibilités d'agencement parmi tant d'autres. Le dispositif représenté sur cette figure 12 comprend une fenêtre transparente 1 et une plaque de base 5 disposées en regard et à distance l'une de l'autre (délimitant une enceinte étanche 16 en coopération avec un joint périphérique 12), entre lesquelles se trouvent interposées deux plaques intermédiaires isolantes superposées 38a et 38b. Au travers de ces deux plaques superposées 38a et 38b se trouvent ménagés différents jours transversaux s'étendant sans entraves de la plaque de base 5 à la fenêtre 1, à savoir respectivement, deux jours transversaux rectangulaires 39 de relativement grande extension; deux jours transversaux rectangulaires 40 de relativement moins grande extension; et un jour transversal 41 en forme de quart de cercle (ces différents jours transversaux 39,40 et 41 se trouvant par ailleurs en libre communication avec un canal périphérique 17 par l'intermédiaire de passages de communication non représentés au dessin par souci de simplification).

Dans chacun des deux jours transversaux 39 se trouve disposée une unité d'affichage analogue à elle précédemment décrite aux figures 10 et 11, se composant de sept segments de grille 10a à 10g encastrés par leurs pattes de fixation 21 entre les plaques intermédiaires 38a et 38b, ces segments 10a à 10g se trouvant par ailleurs reliés à l'extérieur de l'enceinte 16 à l'aide des conducteurs électriques correspondants 14a à 14g, également intercalés entre ces plaques 38a et 38b.

Dans chacun des deux jours transversaux 40 se trouve par ailleurs disposé un élément de grille rectangulaire unique 10h pourvu de deux pattes de fixation 21 faisant saillie d'un même côté de l'élément 10h, ces deux éléments de grille 10h étant encastrés par leurs pattes 21 entre les plaques 38a et 38b, et reliés à l'extérieur de l'enceinte 16 par des conducteurs 14h, également intercalés entre ces plaques 38a et 38b. Ces deux éléments de grille 10h se caractérisent par le fait qu'ils portent une information préinscrite (telle que celle illustrée au dessin) sur leur face située en regard de la fenêtre 1.

Dans le jour transversal 41 en forme d'arc de cercle se trouve enfin disposée, de la façon indiquée au dessin, une pluralité de segments de grille longilignes 10i à 10s pourvus de pattes de fixation 21 à chacune de leurs extrémités, ces segments longilignes 10i à 10s étant ainsi encastrés par leurs deux extrémités entre les plaques intermédiaires 38a et 38b (le centre de gravité de chacun de ces segments étant au demeurant décalé par rapport à l'axe passant par les pattes 21, de façon à permettre le fléchissement de ces segments malgré leur encastrement aux deux extrémités), et ces segments 10i à 10s étant en outre reliés à l'extérieur de l'enceinte 16 à l'aide des conducteurs électriques correspondants 14i à 14s, également intercalés entre ces plaques 38a et 38b.

La face interne de la fenêtre 1 porte enfin des électrodes transparentes 3 (représentées en pointillés au dessin), qui s'étendent respectivement au droit de chacun des jours transversaux 39,40 et 41, tout en débordant de ces jours par l'un de leurs côtés jusqu'à venir affleurer l'extérieur de l'enceinte 16 (les deux éléments de grille indépendants 10h pouvant au demeurant être associés à une électrode 3 unique s'étendant au droit des deux jours 40, ainsi qu'illustré au dessin). De manière analogue, la face interne de la plaque de base 5 porte des électrodes 6 qui s'étendent au droit des électrodes de fenêtre 3, ces électrodes 6 venant donc également affleurer à l'extérieur de l'enceinte 16. Chacun des ensembles d'électrodes 3 et 6 est enfin recouvert par un revêtement isolant unique.

Les différents ensembles d'électrodes fixes 3 et 6, ainsi que les différents éléments de grille 10a à 10g, 10h, et 10i à 10s, sont destinés à être reliés à des circuits de commande analogues à ceux précédemment décrits.

Le fonctionnement du dispositif sus-décrit est par suite analogue à ceux précédemment décrits, et n'a donc pas besoin d'être expliqué en détail : les deux unités d'affichage à sept segments 10a à 10g peuvent être commutés sélectivement à tout instant de façon à faire apparaître tout caractère désiré; les deux éléments d'affichage 10h peuvent être amenés à tout instant en position d'affichage de façon à faire apparaître les informations qui y sont préinscrites; et l'unité d'affichage aux segments disposés en quart de cercle 10i à 10s peut enfin à tout instant être commutée à la manière d'un "bargraph", en vue par exemple d'afficher une grandeur donnée sur une échelle curviligne. Le dispositif sus-décrit peut à titre d'exemple constituer un élément de tableau de bord d'un véhicule automobile.

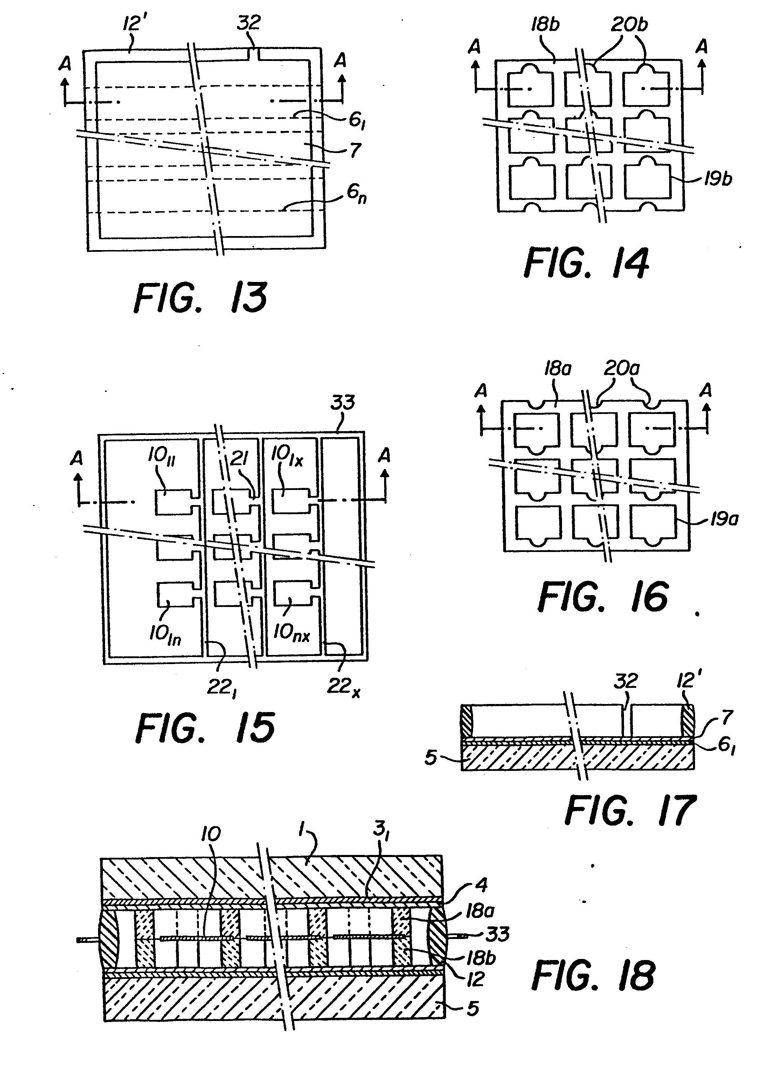

Les figures 13 à 18 illustrent à titre d'exemple une forme de mise en oeuvre possible d'un procédé de fabrication du dispositif d'affichage selon l'invention, appliquée à la fabrication d'un dispositif analogue à la première forme d'exécution des figures 2 à 7.

Le procédé illustré sur ces figures 13 à 18 est mis en oeuvre de la façon suivante :

On dépose tout d'abord (figures 13 à 17) sur l'une des faces d'une première plaque de base isolante 5 d'extension prédéterminée une pluralité de bandes conductrices parallèles $6_1$ à $6_n$, destinées à constituer les électrodes fixes de ligne associées à cette plaque 5, et on recouvre ensuite ces électrodes fixes $6_1$ à $6_n$ d'une couche isolante unique 7.

On dépose de manière analogue sur l'une des faces d'une seconde plaque de base isolante et transparente 1, d'extension sensiblement identique à celle de la plaque 5, une pluralité de bandes conductrices transparentes parallèles $3_1$ à $3_n$, destinées à constituer les électrodes fixes de ligne associées à cette plaque 1, et on recouvre ensuite ces électrodes fixes $3_1$ à $3_n$ d'une couche isolante transparente unique 4 (plaque 1 ainsi revêtue visible en coupe à la figure 18).

On ajoure ensuite deux feuilles de matière plastique (faites par exemple en téflon ou en polyéthylène) d'extension inférieure à celle des plaques de base 1 et 5, selon une configuration permettant (figures 14 et 16) d'obtenir les plaques intermédiaires respectives 18a et 18b pourvues de leurs ouvertures rectangulaires respectives 19a et 19b et de leurs encoches respectives 20a et 20b.

On utilise ensuite une grille d'acier inoxydable laminée d'extension initiale supérieure à celle des plaques de base 1 et 5, et on découpe cette grille selon une configuration permettant d'obtenir, respectivement, un cadre extérieur commun 33, les différents conducteurs de colonne $22_1$ à $22_x$ reliés temporairement par leurs deux extrémités à ce cadre commun 33, et les différents éléments de grille $10_{11}$ à $10_{nx}$ reliés par l'intermédiaire de leurs pattes de fixation 21 à ces différents conducteurs de colonne $22_1$ à $22_x$.

Le découpage susmentionné de cette grille peut être effectué à titre d'exemple à l'aide des techniques bien connues d'attaque photolithographique, lesquelles consistent à effectuer la suite des opérations suivantes :

- application d'une couche de photoresist sur les deux faces de la grille,

- exposition aux UV de la grille ainsi revêtue, au travers d'un masque photographique portant une image négative des portions que l'on désire conserver,

- développement du photoresist à l'aide d'un solvant approprié, entraînant l'élimination des portions de photoresist situées au droit des parties à découper,

- attaque des portions de grille ainsi ·dégagées à l'aide d'une solution d'attaque appropriée (par exemple chlorure ferrique), opérant le découpage proprement dit,

- et, enfin élimination des portions de photoresist restantes (stripping).

Le découpage de la grille une fois terminé, on soumet ensuite cette grille à une opération de décapage (légère exposition à l'acide), suivie par une opération de déposition d'une couche mate d'argent (par des techniques de galvanoplastie), de façon à conférer un haut pouvoir réfléchissant et diffusant à la surface des éléments de grille destinés à être disposés en regard de la plaque transparente 1.

Les opérations sus-décrites une fois terminées, on procède alors à l'assemblage proprement dit (fig.18) du dispositif d'affichage. Pour ce faire, on opère de la façon suivante :

- on dispose (fig.13) sur le pourtour de la face de la plaque de base 5 porteuse des électrodes $6_1$ à $6_n$ un premier cordon périphérique 12' de résine thermodurcissable interrompu sur un petit intervalle 32,

- on applique sur la même face de cette plaque 5 la première plaque intermédiaire ajourée 18b, en la centrant de manière appropriée,

- on applique sur cette plaque 18b la grille précédemment découpée comprenant les différents éléments de grille $10_{11}$ à $10_{nx}$, les différents conducteurs de colonne $22_1$ à $22_x$ et le cadre extérieur commun, et on centre le tout de manière appropriée,

- on applique sur les éléments précédents la seconde plaque intermédiaire ajourée 18a, en la centrant également de manière appropriée,

- on dispose sur le pourtour de la face de la plaque de base transparente 1 porteuse des électrodes $3_1$ à $3_n$ un second cordon périphérique 12' de résine thermodurcissable également interrompu sur un petit intervalle (comme sur la plaque de base 5),

- et, on applique enfin cette plaque de base 1 sur les différents éléments précédents, en la centrant également de manière appropriée.

L'assemblage effectué, on presse alors les deux plaques de base externes 1 et 5 l'une contre l'autre et on soumet l'ensemble à un traitement thermique (passage au four) suffisant pour provoquer le durcissement de la résine constitutive des deux cordons périphériques 12', entraînant ainsi la formation du joint d'étanchéité 12.

Sans cesser de presser les deux plaques 1 et 5, on introduit ensuite l'ensemble dans une enceinte sous vide, et on fait pénétrer le liquide isolant opaque par l'ouverture 32 ménagée dans le joint 12. Ce liquide s'étend alors, grâce aux forces de capillarité, dans tout l'espace disponible à l'intérieur de l'enceinte étanche 16, et notamment dans chacun des jours transversaux 19, ceci grâce à l'aménagement du canal périphérique 17 et des différents passages de communication 20.

Le remplissage effectué, on retire alors le système de l'enceinte à vide et on scelle définitivement l'orifice 32 du joint périphérique 12. La pression exercée sur l'ensemble peut alors être enfin libérée, compte tenu de ce que cet ensemble se trouve alors maintenu en position par la pression atmosphérique.

Le dispositif une fois scellé, on découpe enfin le cadre extérieur commun 33, les extrémités ainsi libérées des conducteurs de colonne $22_1$ à $22_x$ constituant ainsi des points de contacts extérieurs pour ces conducteurs de colonne.

Les deux réseaux d'électrodes 3 et 6 peuvent quant à eux être aisément contactés depuis l'extérieur, notamment si l'on s'arrange pour faire déborder les plaques de base 1 et 5 sur le joint périphérique 12. Le dispositif d'affichage est lors prêt à être connecté à ses circuits de commande.

Le procédé décrit ci-dessus en relation avec la fabrication de la forme d'exécution des figures 2 à 7 peut bien entendu s'appliquer de manière analogue à toutes les autres formes d'exécution possibles du dispositif selon l'invention, et notamment à celles précédemment décrites aux figures 8 à 12.

Le procédé sus-décrit est par ailleurs susceptible de donner lieu à un certain nombre de variantes, qui ne sortent pas pour autant du cadre de la présente invention. On peut ainsi notamment envisager, à titre d'exemple, de presser à chaud la grille métallique continue dans l'une des plaques intermédiaires déjà ajourées, préalablement au découpage de cette grille selon la configuration permettant d'obtenir les différents éléments de grille et les différentes pistes de connexion reliées au cadre commun, de façon à faire jouer à cette plaque intermédiaire ajourée un rôle additionnel de support pour les pistes de connexion destinées à être découpées ultérieurement (variante particulièrement avantageuse dans le cas de pistes de connexion susceptibles de présenter des "porte-à-faux" relativement importants; par exemple figure 12).

On voit ainsi que le dispositif selon l'invention présente un certain nombre d'avantages majeurs, dont l'un des principaux réside dans le fait qu'il peut être fabriqué en série, de façon simple, fiable, reproductible et économique, au moyen d'opérations collectives n'impliquant aucun positionnement, collage ou contactage individuels à l'intérieur de la partie scellée du dispositif.

REVENDICATIONS

1. Dispositif d'affichage sélectif d'une pluralité d'informations, comprenant deux plaques de base isolantes (1,5) d'extension prédéterminées disposées en regard et à distance l'une de l'autre, dont au moins l'une (1) est transparente, délimitant en coopération avec un joint périphérique (12) disposé entre lesdites plaques de base une enceinte étanche aux fluides (16), caractérisé par le fait que ladite enceinte étanche contient :

- deux plaques intermédiaires isolantes superposées (8a;8b;18a,18b;18a',18b';28a,28b;38a,38b), interposées entre lesdites plaques de base de façon à maintenir un écartement prédéterminé entre ces dernières, et présentant une extension inférieure à celle desdites plaques de base de façon à délimiter un canal périphérique (17) entre ces plaques intermédiaires et ledit joint périphérique, chacune desdites plaques intermédiaires étant ajourée par rapport à l'autre de façon à délimiter, en coopération l'une avec l'autre, une pluralité de jours transversaux (9;19;19';29;39,40,41) s'étendant sans entraves d'une plaque de base à l'autre tout en étant en libre communication les uns avec les autres et/ou ledit canal périphérique,

- une pluralité d'éléments d'affichage disposés à l'intérieur desdits jours transversaux, chaque élément d'affichage comprenant une première ($3;3_1$ à $3_n$) et une seconde ($6;6_1$ à $6_n$) électrodes fixes disposées contre les faces en regard desdites plaques de base, dont au moins celle ($3;3_1$ à $3_n$) disposée contre la plaque de base transparente est également transparente, ainsi qu'une troisième électrode mobile ($10;10_{11}$ à $10_{nx};10a$ à $10g;10h;10i$ à $10s$) encastrée par au moins l'une de ses extrémités (21) entre lesdites plaques intermédiaires, susceptible d'être défléchie par des forces électrostatiques entre une première (10A) et une seconde (10B) positions stables pour lesquelles elle vient respectivement se plaquer contre lesdites première et seconde électrodes fixes, chacune desdites électrodes mobiles présentant par ailleurs une structure ajourée lui conférant une résistance au déplacement dans les fluides réduits,

- des moyens d'isolation (4,7) servant à empêcher tout contact et passage de courant, lorsque lesdites électrodes mobiles se trouvent situées dans l'une ou l'autre de leurs deux positions stables, entre ces dernières et lesdites électrodes fixes,

- un liquide opaque remplissant ladite enceinte étanche, dont la couleur contraste avec la couleur de la face desdites électrodes mobiles située en regard de ladite plaque de base transparente, de façon à occulter ces électrodes mobiles lorsqu'elles se trouvent plaquées contre l'autre plaque de base non transparente, ledit liquide opaque étant constitué par une substance essentiellement non polaire présentant une résistivité suffisamment élevée pour empêcher le passage de tout courant d'électrolyse notable au travers de ce liquide et pour éviter ainsi la formation de produits d'électrolyse susceptibles de détériorer le contraste de l'affichage,

- des premiers et seconds moyens pour connecter respectivement lesdites premières et secondes électrodes fixes à l'extérieur de ladite enceinte étanche,

- et, une pluralité de pistes conductrices (22$_1$ à 22$_x$;14a à 14g;14h;14i à 14s) pour connecter lesdites électrodes mobiles à l'extérieur de ladite enceinte étanche, s'étendant entre les portions non ajourées desdites plaques intermédiaires, depuis lesdites extrémités encastrées desdites électrodes mobiles jusqu'à venir déboucher au travers dudit joint périphérique, lesdites électrodes mobiles étant ainsi destinées à constituer les organes d'affichage proprement dits permettant, lorsqu'elles sont plaquées sélectivement contre ladite plaque de base transparente, l'affichage de ladite pluralité d'informations.

2. Dispositif selon la revendication 1, caractérisé par le fait que lesdites électrodes mobiles sont agencées selon un réseau matriciel de lignes et de colonnes.

3. Dispositif selon la revendication 1, caractérisé par le fait que lesdites électrodes mobiles sont agencées de façon à constituer au moins une unité d'affichage à sept segments.

4. Dispositif selon la revendication 1, caractérisé par le fait que lesdites électrodes mobiles sont agencées côte à côte selon au moins une rangée droite ou courbe.

5. Dispositif selon la revendication 1, caractérisé par le fait qu'au moins l'une desdites électrodes mobiles est porteuse d'une information préinscrite.

6. Dispositif selon la revendication 1, caractérisé par le fait que chacune desdites électrodes fixes s'étend au droit d'une seule électrode mobile.

7. Dispositif selon la revendication 1, caractérisé par le fait que chacune desdites électrodes fixes est associée à une pluralité d'électrodes mobiles.

8. Dispositif selon la revendication 1, caractérisé par le fait que lesdites plaques intermédiaires isolantes ajourées sont formées à partir d'une feuille de matière plastique.

9. Dispositif selon la revendication 8, caractérisé par le fait que lesdites feuilles sont en téflon ou en polyéthylène.

10. Dispositif selon la revendication 1, caractérisé par le fait que chacune desdites électrodes mobiles comporte au moins une patte de fixation saillante, d'extension transversale notablement inférieure à celle du bord d'électrode dont elle fait saillie.

11. Dispositif selon la revendication 10, caractérisé par le fait que lesdites électrodes mobiles comportent une patte de fixation unique.

12. Dispositif selon la revendication 10, caractérisé par le fait que lesdites électrodes mobiles comportent au moins deux pattes de fixation faisant saillie du même bord d'électrode.

13. Dispositif selon la revendication 10, caractérisé par le fait que lesdites électrodes mobiles sont de forme longiligne et qu'elles comportent une patte de fixation à chacune de leurs extrémités, lesdites électrodes étant par ailleurs agencées de façon que leur centre de gravité soit décalé par rapport à l'axe passant par lesdites pattes de fixation.

14. Dispositif selon la revendication 1, caractérisé par le fait que lesdites électrodes mobiles sont constituées par un grillage mince composé de fils métalliques entrelacés.

15. Dispositif selon la revendication 14, caractérisé par le fait que lesdits fils métalliques sont aplatis.

16. Dispositif selon la revendication 1, caractérisé par le fait que lesdites électrodes mobiles sont formées en une seule pièce avec lesdites pistes de connexion de ces électrodes mobiles avec l'extérieur.

17. Dispositif selon la revendication 1, caractérisé par le fait que les faces desdites électrodes mobiles situées en regard de ladite plaque de base transparente présentent une surface hautement réfléchissante et diffusante.

18. Dispositif selon la revendication 17, caractérisé par le fait que lesdite faces sont revêtues d'une couche mate d'argent.

19. Dispositif selon la revendication 1, caractérisé par le fait que lesdits moyens d'isolation sont constitués par une couche isolante recouvrant l'ensemble desdites électrodes fixes associées à chacune desdites plaques de base.

20. Dispositif d'affichage selon la revendication 1, caractérisé par le fait que ledit liquide non polaire opaque présente une résistivité électrique au moins égale à $10^{12}$ ohm-cm à 20°C.

21. Dispositif d'affichage selon la revendication 1, caractérisé par le fait que ledit liquide non polaire présente un coefficient d'absorption optique égal ou supérieur à 90 % dans le spectre visible.

22. Dispositif d'affichage selon la revendication 1, caractérisé par le fait que ledit liquide opaque est composé d'une huile silicone, notamment du type polyéthyl-polyméthyl-polysiloxane, qui contient un colorant dissous absorbant la lumière.

23. Dispositif d'affichage selon la revendication 22, caractérisé par le fait que le colorant dissous est du type bleu cérès.

24. Dispositif selon la revendication 1, caractérisé par le fait que ladite plaque de base transparente est munie d'un masque opaque, perforé en regard de chacune desdites électrodes mobiles.

25. Dispositif selon la revendication 1, caractérisé par le fait qu'il est relié à un système de commande à trois tensions ($V_B$, $V_O$, $V_A$).

26. Procédé de fabrication du dispositif d'affichage selon la revendication 1, caractérisé par le fait qu'il consiste à :

- former un premier réseau adéquat d'électrodes fixes sur l'une des faces d'une première plaque de base isolante d'extension prédéterminée, ladite plaque de base ainsi que lesdites électrodes fixes étant transparentes,

- former un second réseau adéquat d'électrodes fixes sur l'une des faces d'une econde plaque de base isolante, d'extension sensiblement identique à celle de la première plaque de base,

- ajourer une première et une seconde plaques intermédiaires isolantes d'extension inférieure à celle desdites plaques de base, selon une configuration permettant l'obtention de ladite pluralité de jours transversaux par superposition desdites plaques intermédiaires,

- découper une feuille conductrice d'extension supérieure à elle desdites plaques de base, selon une configuration permettant de former lesdites électrodes mobiles ainsi que lesdites pistes de connexion, reliées temporairement à une zone périphérique commune,

- assembler les différents éléments plans susmentionnés de façon à réaliser un empilement se composant, respectivement, desdites plaques intermédiaires ainsi ajourées superposées l'une à l'autre, entre lesquelles se trouve intercalée ladite feuille conductrice ainsi découpée, et desdites plaques de base pressées par leur face pourvue desdits réseaux d'électrodes contre lesdites plaques intermédiaires,

- former sur le pourtour desdites plaques de base ledit joint périphérique destiné à délimiter une enceinte étanche en coopération avec ces dernières, ladite zone périphérique commune de ladite feuille conductrice restant par ailleurs située à l'extérieur de ladite enceinte étanche,

- remplir ladite enceinte étanche dudit liquide opaque à haute résistivité,

- et, enlever ladite zone périphérique commune de ladite feuille conductrice située à l'extérieur de l'enceinte, les extrémités ainsi libérées desdites pistes conductrices constituant des points de contact desdites électrodes mobiles avec l'extérieur.

27. Procédé de fabrication selon la revendication 26, caractérisé par le fait que l'on recouvre en outre par une couche isolante unique les réseaux d'électrodes fixes portés par chacune desdites plaques de base, ledit recouvrement étant effectué préalablement audit assemblage.

28. Procédé de fabrication selon la revendication 26, caractérisé par le fait que le remplissage de ladite enceinte étanche par ledit liquide opaque est effectué en faisant tout d'abord le vide dans ladite enceinte étanche, et en introduisant ensuite dans l'enceinte ainsi vidée ledit liquide opaque, ledit liquide s'étendant alors par effet de capillarité dans tout l'espace disponible à l'intérieur de ladite enceinte étanche.

29. Procédé de fabrication selon la revendication 28, caractérisé par le fait que l'on applique une pression prédéterminée sur ledit assemblage durant toute la durée des opérations de vide et de remplissage subséquent, l'application de ladite pression étant arrêtée une fois l'enceinte étanche complètement obturée.

30. Procédé de fabrication selon la revendication 26, caractérisé par le fait que ladite feuille conductrice est constituée par un grillage mince se composant de fils métalliques entrelacés, lesdites électrodes mobiles ainsi que lesdites pistes de connexion étant formées d'une seule pièce à partir dudit grillage.

FIG. 1

FIG. 2

FIG. 3

FIG. 4

FIG. 5

FIG. 6

3/7

FIG. 7

FIG. 8

FIG. 9

FIG. 10

FIG. II

FIG. 12

FIG. 13

FIG. 14

FIG. 15

FIG. 16

FIG. 17

FIG. 18

# 0007885

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | FR - A - 2 318 474 (THOMSON-CSF) <br> * Page 4, lignes 23-24; page 5, lignes 1-20; revendications 1,3-5,8,9,11,13; figures 1,3 * <br><br> -- | 1-4, 6-7, 14,19, 21,26, 30 | G 02 F   1/01 |
| | FR - A - 2 322 416 (PHILIPS) <br> * Page 6, lignes 6-36; reven-dication 1; figures 1-7 * <br><br> -- | 1-4,6, 7,10-12,17, 19,21, 26,27 | |
| | FR - A - 2 030 876 (TEXAS INST.) <br> * Page 5, lignes 19-23; figures 1-4 * <br><br> -- | 24 | DOMAINES TECHNIQUES RECHERCHES (Int. Cl.³) <br><br> G 02 F   1/01 <br> G 06 F   3/14 <br> G 08 B   5/22 <br>           5/24 |
| A | FR - A - 2 294 535 (J. LEWINER et G. DREYFUS) <br> * Revendications 1,3,4,7,9,15; figures 1-6,14 * <br><br> ---- | 1 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-07-1979 | ARMITANO GRIVEL |

OEB Form 1503.1   06.78